# EUROPEAN PATENT APPLICATION

(11) **EP 4 674 655 A1**
(43) Date of publication of application: **07.01.2026**
(21) Application number: 24823074.0
(22) Date of filing: 08.04.2024
(51) Int. Cl.: B60H 1/22, B60H 1/00, B60H 1/08

(54) **VEHICLE AIR CONDITIONING SYSTEM**

(30) Priority: 13.06.2023 JP 2023097054; 27.12.2023 JP 2023220793; 27.12.2023 JP 2023220794
(71) Applicant: AISIN CORPORATION, Kariya-shi, Aichi 448-8650 (JP)
(72) Inventor: MARUYAMA Koichi, Kariya-shi, Aichi 448-8650 (JP); ITO Yoshikuni, Kariya-shi, Aichi 448-8650 (JP); KODAMA Kazuya, Kariya-shi, Aichi 448-8650 (JP)
(74) Representative: Kramer Barske Schmidtchen Patentanwälte PartG mbB
(86) International application number: PCT/JP2024/014212
(87) International publication number: WO 2024/257451

(57) **Abstract**

A vehicle air conditioning system includes: a refrigerant flow path that circulates a refrigerant across a condenser and an evaporator; a coolant flow path through which a coolant that exchanges heat with the refrigerant in the condenser and the evaporator flows; and a heat exchanger that performs heat exchange between air and the coolant in order to cool and heat a vehicle interior.

## Description

### TECHNICAL FIELD

The present invention relates to a vehicle air conditioning system.

### BACKGROUND ART

Conventionally, a vehicle air conditioning system that performs cooling and heating of a vehicle interior is used. As a technique related to such a vehicle air conditioning system, for example, there is a technique described in Patent Literatures 1 and 2 which are referred to below.

Patent Literature 1 describes a refrigeration cycle device. The refrigeration cycle device is applied to a vehicle air conditioner. The vehicle air conditioner is configured to be switchable between a cooling mode and a heating mode. In the cooling mode, blown air is cooled in an interior evaporator and cold air is supplied into the interior. On the other hand, in the heating mode, heat is exchanged through a heater core between a refrigerant changed into a high-temperature and high-pressure state by a compressor and cooling water subjected to heat exchange, blown air is heated, and warm air is supplied into the interior. An air mix door is disposed between a blown air flow downstream side of the interior evaporator and a blown air flow upstream side of the heater core, and the air mix door adjusts an air volume ratio between an air volume passing through the heater core and an air volume passing through a cold air bypass passage in the blown air that has passed through the interior evaporator.

The vehicle air conditioning system described in Patent Literature 2 is configured to be switchable between a cooling mode and a heating mode by using a coolant subjected to heat exchange with a refrigerant flowing through a condenser and an evaporator of a heat pump cycle. This vehicle air conditioning system includes a first heat exchanger that performs heat exchange between air and a coolant cooled through the evaporator, and a second heat exchanger that performs heat exchange between air subjected to heat exchange in the first heat exchanger and a coolant warmed through the condenser. As a result, after air is dehumidified by the first heat exchanger, the air is heated by the second heat exchanger, so that a dehumidifying and heating operation can be realized, and a drying material such as desiccant is unnecessary.

### CITATIONS LIST

### PATENT LITERATURE

Patent Literature 1: JP 2019-60580 A
Patent Literature 2: JP 2015-16706 A

### SUMMARY OF INVENTION

### TECHNICAL PROBLEMS

As described above, the vehicle air conditioner described in Patent Literature 1 includes the interior evaporator, the heater core, and the air mix door in order to supply cold air and warm air to the vehicle interior. The vehicle air conditioner described in Patent Literature 1 as described above has room for improvement in terms of downsizing and cost reduction.

In addition, as described above, the vehicle air conditioning system including the first heat exchanger and the second heat exchanger described in Patent Literature 2 does not require a drying material such as desiccant, and thus can be downsized. On the other hand, for example, in the cooling mode, if the temperature of the coolant cooled through the evaporator becomes too low, air is excessively dehumidified to become dry air having extremely low humidity, and the dry air is introduced into the vehicle interior. That is, it is difficult to adjust the humidity of the air blown into the vehicle interior.

Therefore, a vehicle air conditioning system having a small size and an inexpensive configuration is required. In addition, a vehicle air conditioning system that can adjust the humidity of the blown air is required.

### SOLUTIONS TO PROBLEMS

A characteristic configuration of a vehicle air conditioning system according to the present invention includes: a refrigerant flow path that circulates a refrigerant across a condenser and an evaporator; a coolant flow path through which a coolant that exchanges heat with the refrigerant in the condenser and the evaporator flows; and a heat exchanger that performs heat exchange between air and the coolant in order to cool and heat a vehicle interior.

With such a characteristic configuration, heat exchange can be performed by causing the coolant warmed by the condenser to flow through the heat exchanger during heating of the vehicle interior, and heat exchange can be performed by causing the coolant cooled by the evaporator to flow through the heat exchanger during cooling of the vehicle interior. As a result, an interior evaporator and a heater core included in a conventional vehicle air conditioning system can be replaced with one heat exchanger, so that downsizing and cost reduction of the vehicle air conditioning system can be achieved. Therefore, a vehicle air conditioning system having a small size and an inexpensive configuration can be realized.

In addition, a characteristic configuration of a vehicle air conditioning system according to the present invention includes: a refrigerant flow path that circulates a refrigerant across a condenser and an evaporator; a coolant flow path through which a coolant that exchanges heat with the refrigerant in the condenser and the evaporator flows; a first heat exchanger that allows heat exchange between air and the coolant; and a second heat exchanger that allows heat exchange between the air subjected to heat exchange in the first heat exchanger and the coolant, in which the coolant flow path includes a switching mechanism that is switchable between a first state in which the coolant is circulated across the evaporator and the first heat exchanger and a second state in which the coolant is circulated across the evaporator, the first heat exchanger, and the second heat exchanger.

According to such a configuration, a cooling mode similar to that in the conventional art can be executed in the first state, and the coolant cooled through the evaporator can be distributed to the first heat exchanger and the second heat exchanger in the second state. In the second state, since the heat capacity of the coolant cooled through the evaporator is dispersed in the first heat exchanger and the second heat exchanger, the air having passed through the first heat exchanger is not rapidly cooled, and a decrease in humidity of the air can be suppressed as compared with the case where the air is cooled only by the first heat exchanger as in the first state. Furthermore, the humidity of the air introduced into the vehicle interior can be adjusted by adjusting the flow rate of the coolant flowing through the first heat exchanger and the second heat exchanger. Therefore, a vehicle air conditioning system that can adjust the humidity of blown air can be realized.

### BRIEF DESCRIPTION OF DRAWINGS

FIG. 1 is a circuit configuration diagram of a vehicle air conditioning system according to a first embodiment.
FIG. 2A is a plan view illustrating an arrangement of the vehicle air conditioning system according to the first embodiment.
FIG. 2B is a side view illustrating the arrangement of the vehicle air conditioning system according to the first embodiment.
FIG. 3 is a diagram illustrating a flow of a coolant in a first state according to the first embodiment.
FIG. 4 is a diagram illustrating a flow of the coolant in a second state according to the first embodiment.
FIG. 5 is a diagram illustrating a state of a switching valve according to the first embodiment.
FIG. 6 is a circuit configuration diagram of a vehicle air conditioning system according to a second embodiment.
FIG. 7 is a diagram illustrating a flow of a coolant when the vehicle air conditioning system according to the second embodiment is in a first state.
FIG. 8 is a diagram illustrating a flow of the coolant when the vehicle air conditioning system according to the second embodiment is in a second state.
FIG. 9 is a diagram illustrating a flow of the coolant when the vehicle air conditioning system according to the second embodiment is in a third state.
FIG. 10 is a diagram illustrating a flow of the coolant when the vehicle air conditioning system according to the second embodiment is in a fourth state.
FIG. 11 is a circuit configuration diagram of a vehicle air conditioning system according to a third embodiment.
FIG. 12 is a circuit configuration diagram of a vehicle air conditioning system according to a fourth embodiment.
FIG. 13 is a diagram illustrating a flow of a coolant in a first state according to the fourth embodiment.
FIG. 14 is a diagram illustrating a flow of the coolant in a second state according to the fourth embodiment.
FIG. 15 is a diagram illustrating a flow of the coolant in a third state according to the fourth embodiment.
FIG. 16 is a diagram illustrating a flow of the coolant in a fourth state according to the fourth embodiment.
FIG. 17 is a circuit configuration diagram of an air conditioning system for a vehicle according to a fifth embodiment.

### DESCRIPTION OF EMBODIMENTS

### [First embodiment]

A vehicle air conditioning system according to the present invention is configured to be able to perform cooling and heating of a vehicle interior. Hereinafter, a vehicle air conditioning system A of the present embodiment will be described. However, the vehicle air conditioning system A is not limited to the following embodiments, and various modifications can be made without departing from the gist thereof.

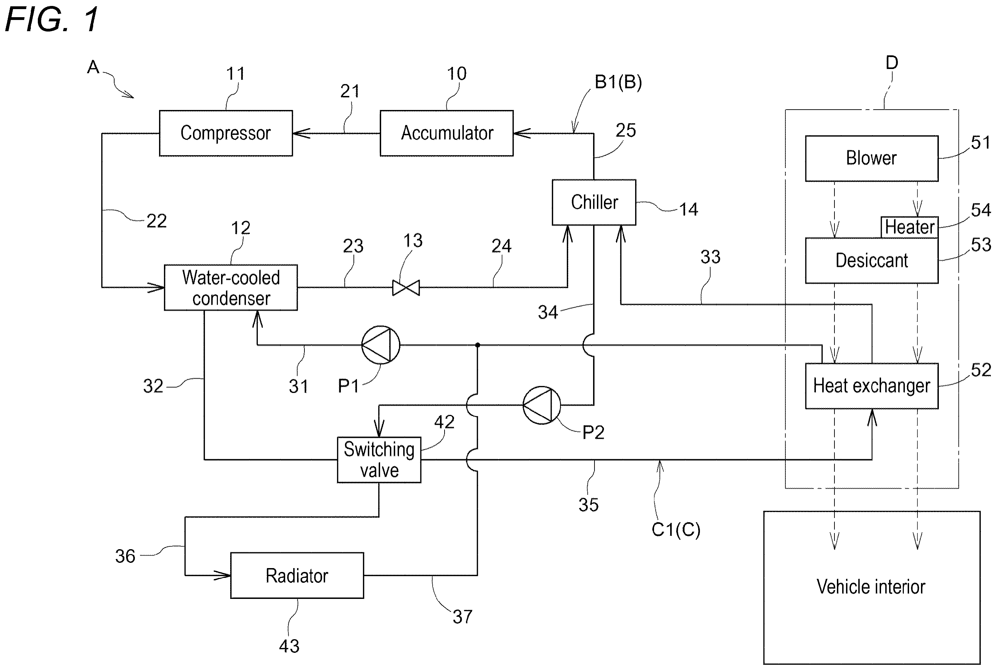

FIG. 1 is a diagram illustrating a circuit configuration of the vehicle air conditioning system A. The vehicle air conditioning system A is mounted on a vehicle, and includes a refrigerant module B, a coolant module C, and an HVAC (Heating, Ventilation, and Air Conditioning) unit (an example of an "air conditioning unit") D as illustrated in FIG. 1. The refrigerant module B is provided with a refrigerant flow path B1 and is configured as a refrigerant manifold. In addition, the coolant module C is provided with a coolant flow path C1 and is configured as a coolant manifold. Here, the manifold is a flow path housing in which a plate member is stacked and sealed on a housing body in which the coolant flow path C1 or the refrigerant flow path B1 is carved. The flow path housing is formed of a metal material having high thermal conductivity including aluminum.

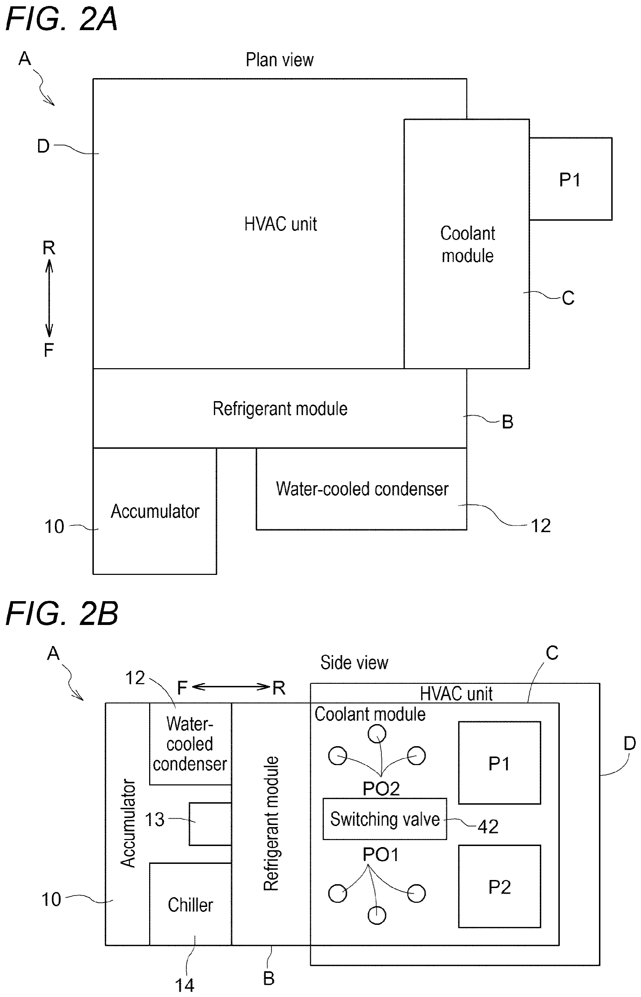

A refrigerant such as hydrofluorocarbon (HFC) or hydrofluoroolefin (HFO) flows through the refrigerant flow path B1, and a coolant including an antifreeze liquid containing ethylene glycol or the like as a main component, cooling water such as a long life coolant, or an insulating oil such as paraffin flows through the coolant flow path C1. FIGS. 2A and 2B illustrate the arrangement of the refrigerant module B, the coolant module C, and the HVAC unit D in the vehicle air conditioning system A. FIG. 2A is a plan view, and FIG. 2B is a side view. In addition, in FIGS. 2A and 2B, the front side in the traveling direction of the vehicle in a state where the vehicle air conditioning system A is mounted on the vehicle is indicated as F, and the rear side in the traveling direction is indicated as R. The coolant module C is provided with ports PO1, PO2 through which the coolant is introduced and discharged.

As illustrated in FIGS. 1, 2A, and 2B, the refrigerant flow path B1 circulates the refrigerant across a water-cooled condenser (an example of a "condenser") 12 and a chiller (an example of an "evaporator") 14. The refrigerant module B is configured to allow the refrigerant to flow between an accumulator 10, a compressor 11, the water-cooled condenser 12, an expansion valve 13, and the chiller 14 through the refrigerant flow path B1.

The accumulator 10 stores the liquid refrigerant and performs gas-liquid separation of the stored refrigerant. The gaseous refrigerant separated by the accumulator 10 flows through a first refrigerant path 21 and is sent to the compressor 11.

The compressor 11 compresses the refrigerant from the accumulator 10. As a result, the refrigerant becomes a high-temperature compressed gas. The compressor 11 sends the refrigerant that has become the high-temperature compressed gas to the water-cooled condenser 12 through a second refrigerant path 22. Accordingly, the compressor 11 pumps the refrigerant from the accumulator 10 to the water-cooled condenser 12.

The refrigerant that has passed through the compressor 11 flows through the water-cooled condenser 12. The coolant flows into the water-cooled condenser 12 from a first coolant flow path 31, and flows out from a second coolant flow path 32. The first coolant flow path 31 and the second coolant flow path 32 are configured separately from the second refrigerant path 22. The refrigerant from the second refrigerant path 22 is condensed and liquefied by being deprived of heat by the coolant. The liquefied refrigerant is sent to a third refrigerant path 23. Similarly to the second refrigerant path 22, the third refrigerant path 23 is configured separately from the first coolant flow path 31 and the second coolant flow path 32.

In the expansion valve 13, the refrigerant (liquefied refrigerant) flowing through the third refrigerant path 23 is expanded into a low-temperature and low-pressure atomized refrigerant. The atomized refrigerant is sent to a fourth refrigerant path 24.

The refrigerant flows to the chiller 14 through the fourth refrigerant path 24. As described above, the low-temperature and low-pressure atomized refrigerant expanded by the expansion valve 13 flows through the fourth refrigerant path 24, and such a refrigerant is sent to the chiller 14. The coolant subjected to heat exchange in a heat exchanger 52 flows into the chiller 14 from a third coolant flow path 33, and the coolant flows out from a fourth coolant flow path 34. The third coolant flow path 33 and the fourth coolant flow path 34 are configured separately from the fourth refrigerant path 24. In the chiller 14, the atomized refrigerant takes heat from the coolant and evaporates. The evaporated and vaporized refrigerant passes through a fifth refrigerant path 25 and flows through the accumulator 10.

In addition, the coolant that exchanges heat with the refrigerant in the water-cooled condenser 12 and the chiller 14 flows through the coolant flow path C1. The coolant module C is configured such that the coolant can flow between the water-cooled condenser 12, the chiller 14, a switching valve 42, a radiator 43, and the heat exchanger 52 through the coolant flow path C1 by a first pump P1 and a second pump P2.

As described above, the coolant flows into the water-cooled condenser 12 from the first coolant flow path 31, and the coolant flows out from the second coolant flow path 32. The first pump P1 is provided in the first coolant flow path 31, and the coolant is sent by the first pump P1.

The switching valve 42 is disposed in the coolant flow path C1, and is configured to allow the coolant to flow therethrough from the water-cooled condenser 12 and the chiller 14. The coolant is sent from the water-cooled condenser 12 to the switching valve 42 through the second coolant flow path 32, and the coolant is sent from the chiller 14 through the fourth coolant flow path 34. The second pump P2 is provided in the fourth coolant flow path 34, and the coolant is sent from the chiller 14 to the switching valve 42 by the second pump P2.

The switching valve 42 is configured to allow the coolant to be sent to a fifth coolant flow path 35 and a sixth coolant flow path 36. The coolant sent from the switching valve 42 to the fifth coolant flow path 35 flows through the heat exchanger 52. The coolant sent to the heat exchanger 52 can be sent to the water-cooled condenser 12 through the first coolant flow path 31, and can be sent to the chiller 14 through the third coolant flow path 33.

In addition, the coolant sent from the switching valve 42 to the sixth coolant flow path 36 flows through the radiator 43. In the radiator 43, heat exchange is performed with outside air, and the coolant is cooled. The coolant subjected to the heat exchange is sent to the first coolant flow path 31 through a seventh coolant flow path 37.

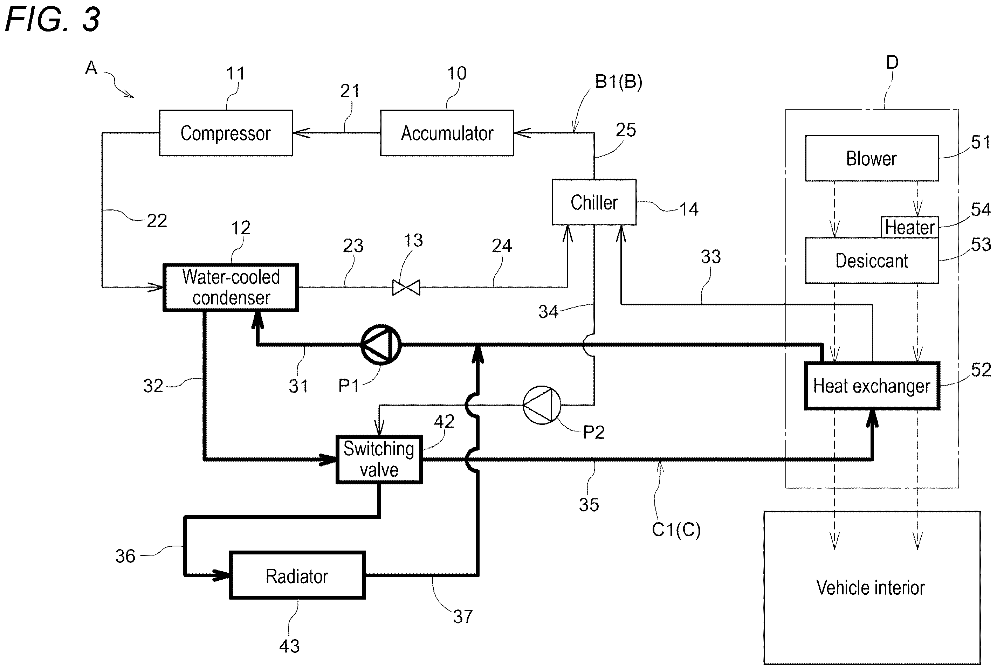

The switching valve 42 is configured to switch the flowing state of the coolant in the coolant flow path C1 between a first state and a second state. The first state is a state in which the coolant is circulated across the water-cooled condenser 12. FIG. 3 illustrates a flowing state of the coolant in the first state described above. As illustrated in FIG. 3, in the first state, the coolant is circulated by the first pump P1 along the water-cooled condenser 12, the second coolant flow path 32, the switching valve 42, the fifth coolant flow path 35, the heat exchanger 52, and the first coolant flow path 31.

At this time, the coolant may be sent from the switching valve 42 to the sixth coolant flow path 36, and may flow so as to return to the first coolant flow path 31 through the radiator 43 and the seventh coolant flow path 37.

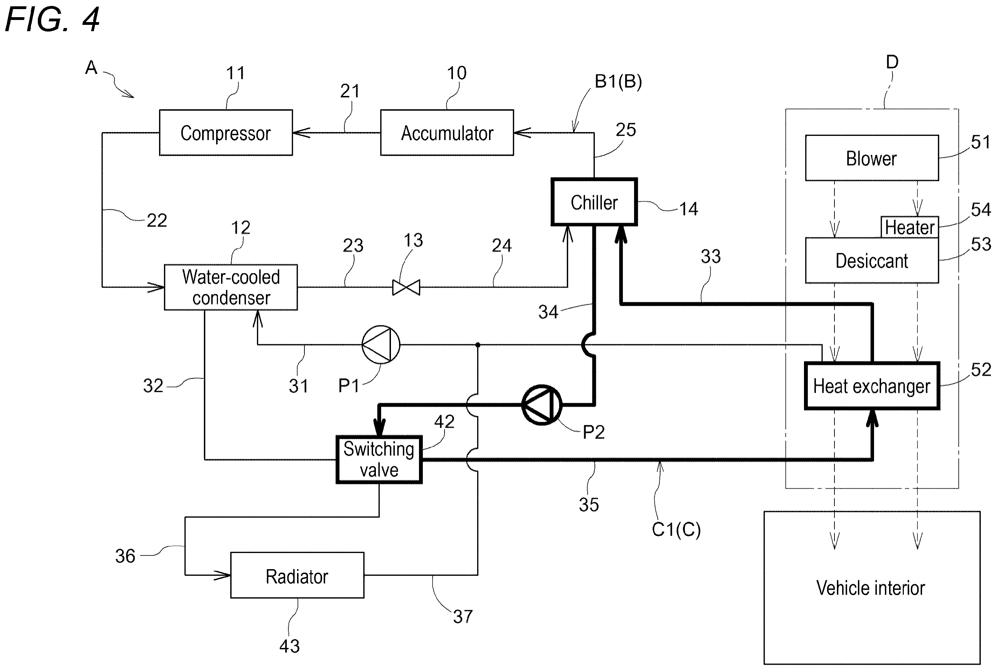

The second state is a state in which the coolant is circulated across the chiller 14. FIG. 4 illustrates a flowing state of the coolant in the second state described above. As illustrated in FIG. 4, in the second state, the coolant is circulated by the second pump P2 along the chiller 14, the fourth coolant flow path 34, the switching valve 42, the fifth coolant flow path 35, the heat exchanger 52, and the third coolant flow path 33.

The switching valve 42 described above is switched between the first state and the second state by a control part (not illustrated) of the vehicle air conditioning system A or a host system of the vehicle air conditioning system A.

Returning to FIG. 1, the HVAC unit D includes a blower 51, the heat exchanger 52, a desiccant 53, and a heater (electric heater) 54. The blower 51 sucks outside air and sends the sucked outside air to the heat exchanger 52.

The heat exchanger 52 performs heat exchange between air and the coolant in order to cool and heat the vehicle interior. The air is outside air sucked by the blower 51. In addition, as described above, the coolant is introduced into the heat exchanger 52 through the fifth coolant flow path 35, and the coolant is sent to one or both of the first coolant flow path 31 and the third coolant flow path 33 according to the state of the switching valve 42 (details will be described later). Therefore, in the heat exchanger 52, heat exchange is performed between the outside air sent from the blower 51 and the coolant supplied through the fifth coolant flow path 35, and the air subjected to the heat exchange is introduced into the vehicle interior. Specifically, in a case where the outside air is cooled in the heat exchanger 52, cold air is introduced into the vehicle interior, and in a case where the outside air is warmed in the heat exchanger 52, warm air is introduced into the vehicle interior. As a result, the vehicle interior can be cooled or heated.

The desiccant 53 adsorbs moisture contained in moisture-containing air to generate warmed dry air. The desiccant 53 functions as an adsorption part that adsorbs moisture, and can be configured using, for example, an adsorbent such as zeolite, silica gel, or activated carbon. The desiccant 53 is provided between the blower 51 and the heat exchanger 52. Therefore, the outside air sent from the blower 51 is discharged to the heat exchanger 52 via the desiccant 53.

The electric heater 54 evaporates moisture adsorbed by the desiccant 53 to generate cooled humidified air. The electric heater 54 functions as a warming part that evaporates moisture adsorbed by the desiccant 53. As illustrated in FIG. 1, the electric heater 54 is assembled to, for example, the desiccant 53 (configured integrally with the desiccant 53). In this case, the desiccant 53 is heated by the electric heater 54, whereby the moisture adsorbed by the desiccant 53 evaporates. Of course, the electric heater 54 may be provided on the upstream side of the desiccant 53 (between the blower 51 and the desiccant 53) and at a position separated from the desiccant 53 (may be provided separately from the desiccant 53) without being assembled to the desiccant 53. In this case, the air from the blower 51 is heated by the electric heater 54, and the heated air is supplied to the desiccant 53, whereby the moisture adsorbed by the desiccant 53 evaporates. The air supplied to the desiccant 53 is humidified by such moisture evaporated from the desiccant 53, and cooled humidified air is generated. The warming part that evaporates the moisture adsorbed by the desiccant 53 may be an air heating device other than the electric heater 54.

When moisture-containing air is supplied from the blower 51 to the desiccant 53 in a state where moisture is not adsorbed by the desiccant 53, the desiccant 53 adsorbs moisture in the moisture-containing air to lower the humidity of the moisture-containing air. As a result, the moisture-containing air supplied to the desiccant 53 becomes dry air dehumidified by the desiccant 53 and is discharged to the heat exchanger 52.

On the other hand, when air heated by the electric heater 54 or high-temperature air from the blower 51 is supplied to the desiccant 53 in a state where moisture is adsorbed by the desiccant 53, the desiccant 53 desorbs the adsorbed moisture. The desorbed moisture humidifies the high-temperature air. As a result, the high-temperature air supplied to the desiccant 53 becomes wet air humidified by the desiccant 53 and is discharged to the heat exchanger 52.

The heat exchanger 52 performs heat exchange between the warmed dry air or the cooled humidified air and the coolant to generate vehicle interior cooling air or vehicle interior heating air. Therefore, in the heat exchanger 52, heat exchange is performed between the dry air and the coolant introduced through the fifth coolant flow path 35 to generate the vehicle interior cooling air. In addition, in the heat exchanger 52, heat exchange is performed between the wet air and the coolant introduced through the fifth coolant flow path 35 to generate the vehicle interior heating air. Further, in the heat exchanger 52, the vehicle interior heating air can also be generated by performing heat exchange between the dry air and the coolant introduced through the fifth coolant flow path 35. In this case, dehumidified heating air can be supplied into the vehicle interior when a defroster function is used, for example, in winter. By introducing such vehicle interior cooling air and vehicle interior heating air into the vehicle interior, the humidity in the vehicle interior can be adjusted.

Here, as described above, the switching valve 42 is configured such that the coolant from the water-cooled condenser 12 and the coolant from the chiller 14 can flow therethrough. In a case where the coolant from the water-cooled condenser 12 is compared with the coolant from the chiller 14, the temperature of the coolant from the water-cooled condenser 12 is relatively higher than the temperature of the coolant from the chiller 14. Therefore, in a case where the vehicle interior is heated, the switching valve 42 is brought into the first state in which the coolant is circulated across the water-cooled condenser 12, and in a case where the vehicle interior is cooled, the switching valve 42 is brought into the second state in which the coolant is circulated across the chiller 14.

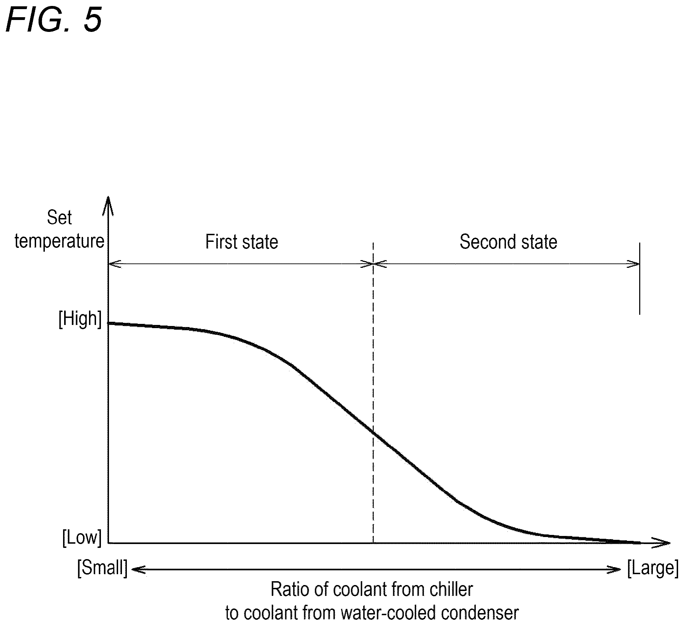

In the present embodiment, the switching valve 42 is configured such that the opening degree is changeable so as to simultaneously realize the first state and the second state. Therefore, in the switching valve 42, the coolant having a relatively high temperature from the water-cooled condenser 12 and the coolant having a relatively low temperature from the chiller 14 can be mixed and sent to the fifth coolant flow path 35. As illustrated in FIG. 5, in a case where the set temperature of air conditioning in the vehicle interior is high, the ratio of the coolant from the chiller 14 to the coolant from the water-cooled condenser 12 may be decreased, and in a case where the set temperature of air conditioning in the vehicle interior is low, the ratio of the coolant from the chiller 14 to the coolant from the water-cooled condenser 12 may be increased. In this manner, by changing the opening degree of the switching valve 42 according to the set temperature of air conditioning in the vehicle interior and controlling the flow rate of the coolant from the second coolant flow path 32 and the flow rate of the coolant from the fourth coolant flow path 34, the temperature of the coolant sent to the fifth coolant flow path 35 is adjusted, and the temperature in the vehicle interior can be adjusted to the set temperature of the air conditioning.

In the present embodiment, as illustrated in FIGS. 2A and 2B, the refrigerant module B and the coolant module C are integrated with the HVAC unit D. Here, "integrated" means a state in which the refrigerant module B and the coolant module C are fixed to the HVAC unit D with bolts or the like. Note that the term "integrated" also includes the case where the HVAC unit D, the refrigerant module B, and the coolant module C are made of the same material to form the same case. Specifically, as illustrated in FIG. 2A, in a state where the HVAC unit D is mounted on the vehicle, the refrigerant module B is provided on the front side of the HVAC unit D in the traveling direction of the vehicle. As described above, by integrating the refrigerant module B and the coolant module C with the HVAC unit D, the flow path through which the coolant flows between the coolant module C and each of the refrigerant module B and the HVAC unit D can be easily routed and shortened as compared with the case where the refrigerant module B and the coolant module C are not integrated with the HVAC unit D. Therefore, the vehicle air conditioning system A can be downsized, and the power cost can be improved. In addition, as illustrated in FIGS. 2A and 2B, since the water-cooled condenser 12, the expansion valve 13, and the chiller 14 can be disposed on the forward side of the vehicle, traveling air can be blown to the water-cooled condenser 12, the expansion valve 13, and the chiller 14 as the vehicle travels. Therefore, dew condensation on the water-cooled condenser 12, the expansion valve 13, and the chiller 14 can be prevented.

In addition, as illustrated in FIG. 2B, in a state where the HVAC unit D is mounted on the vehicle, the coolant module C is provided on the left side surface of the vehicle in the HVAC unit D. As a result, as illustrated in FIG. 2B, the ports PO1, PO2 are provided, so that the introducing and sending routes of the coolant in the coolant module C can be easily secured. In addition, the first pump P1, the second pump P2, and the switching valve 42 are disposed on the side surface of the HVAC unit D, so that maintainability can be improved.

### [Another embodiment of first embodiment]

Next, another embodiment of the vehicle air conditioning system A according to the first embodiment will be described.

In the above-described embodiment, it has been described that in the vehicle air conditioning system A, the switching valve 42 is disposed in the coolant flow path C1, the switching valve 42 being switchable between the first state in which the coolant is circulated across the water-cooled condenser 12 and the second state in which the coolant is circulated across the chiller 14. However, the vehicle air conditioning system A can be configured without the switching valve 42. In this case, a flow path that circulates a coolant between the water-cooled condenser 12 and the heat exchanger 52 and a flow path that circulates the coolant between the chiller 14 and the heat exchanger 52 may be provided separately (independently), and furthermore, an on-off valve may be provided in each flow path. By switching the on-off valves described above between the open state and the closed state, the coolant from the water-cooled condenser 12 and the coolant from the chiller 14 can be circulated across the heat exchanger 52. In addition, the coolant from the water-cooled condenser 12 and the coolant from the chiller 14 can simultaneously flow through the heat exchanger 52.

In the above-described embodiment, it has been described that the opening degree of the switching valve 42 is changeable so as to simultaneously realize the first state and the second state. However, the switching valve 42 can be configured not to simultaneously realize the first state and the second state.

In the above-described embodiment, it has been described that the coolant module C having the coolant flow path C1 is integrated with the HVAC unit D having the heat exchanger 52 and performing cooling and heating of the vehicle interior. However, the coolant module C may not be integrated with the HVAC unit D. Furthermore, in the above-described embodiment, it has been described that the refrigerant module B having the refrigerant flow path B1 is integrated with the HVAC unit D having the heat exchanger 52 and performing cooling and heating of the vehicle interior. However, the refrigerant module B may not be integrated with the HVAC unit D.

### [Second embodiment]

### [Circuit configuration of vehicle air conditioning system]

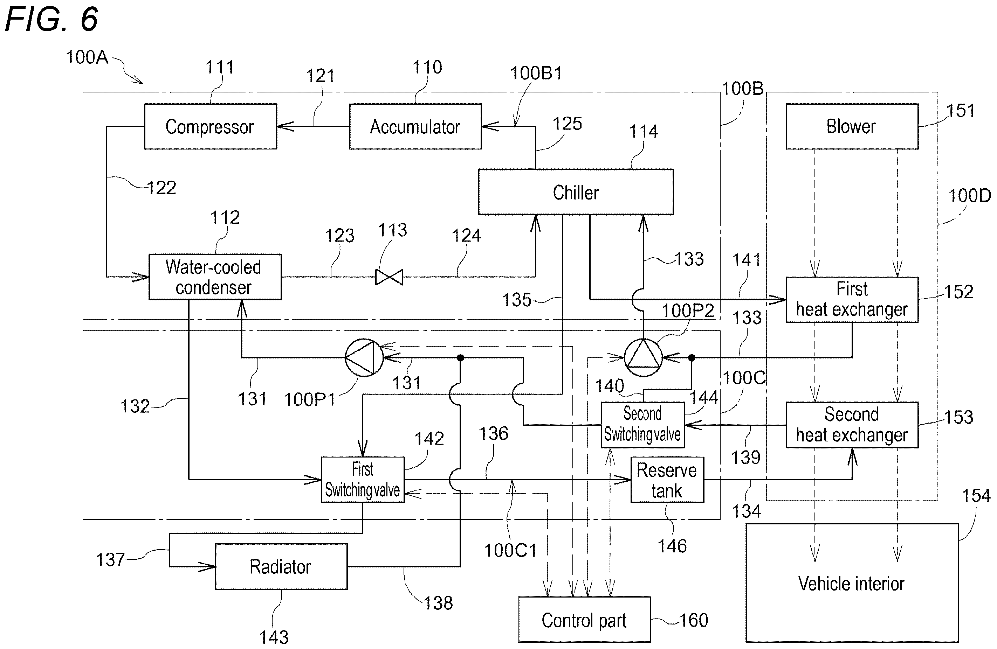

Next, a circuit configuration of a vehicle air conditioning system 100A according to a second embodiment will be described. The vehicle air conditioning system 100A is mounted on a vehicle, and is configured to be switchable between a cooling mode and a heating mode. The vehicle air conditioning system 100A includes a refrigerant module 100B, a coolant module 100C, and an HVAC (Heating, Ventilation, and Air Conditioning) unit 100D as illustrated in FIG. 6. The refrigerant module 100B is provided with a refrigerant flow path 100B1 and is configured as a refrigerant manifold. In addition, the coolant module 100C is provided with a coolant flow path 100C1 and is configured as a coolant manifold. The manifold is a flow path housing in which a plate member is stacked and sealed on a housing body in which at least part of the coolant flow path 100C1 or the refrigerant flow path 100B1 is formed. The flow path housing is formed of a metal material having high thermal conductivity including aluminum or resin. The HVAC unit 100D includes a blower 151, a first heat exchanger 152 (an example of a heat exchanger), and a second heat exchanger 153 (an example of the heat exchanger).

A refrigerant such as hydrofluorocarbon (HFC) or hydrofluoroolefin (HFO) flows through the refrigerant flow path 100B1. A coolant including an antifreeze liquid containing ethylene glycol or the like as a main component, cooling water such as a long life coolant, or an insulating oil such as paraffin flows through the coolant flow path 100C1.

As illustrated in FIG. 6, the refrigerant module 100B includes an accumulator 110, a compressor 111, a water-cooled condenser 112, an expansion valve 113, a chiller 114, and a refrigerant flow path 100B1 that circulates the refrigerant between them so that the refrigerant flows between them. The refrigerant flow path 100B1 includes a first refrigerant flow path 121, a second refrigerant flow path 122, a third refrigerant flow path 123, a fourth refrigerant flow path 124, and a fifth refrigerant flow path 125. The first refrigerant flow path 121 is disposed between the accumulator 110 and the compressor 111. The second refrigerant flow path 122 is disposed between the compressor 111 and the water-cooled condenser 112. The third refrigerant flow path 123 is disposed between the water-cooled condenser 112 and the expansion valve 113. The fourth refrigerant flow path 124 is disposed between the expansion valve 113 and the chiller 114. The fifth refrigerant flow path 125 is disposed between the chiller 114 and the accumulator 110. The refrigerant flow path 100B1 is an annular flow path.

The coolant module 100C includes a first pump 100P1, a second pump 100P2, a first switching valve 142, a second switching valve 144, a reserve tank 146 (an example of a storage part), and part of a coolant flow path 100C1 that causes the coolant to flow between them. The coolant flow path 100C1 includes a first coolant flow path 131, a second coolant flow path 132, a third coolant flow path 133, a fourth coolant flow path 134, a fifth coolant flow path 135, a sixth coolant flow path 136, a seventh coolant flow path 137, an eighth coolant flow path 138, a ninth coolant flow path 139, a tenth coolant flow path 140, and an eleventh coolant flow path 141. The first pump 100P1 is disposed in the middle of the first coolant flow path 131, the second pump 100P2 is disposed in the middle of the third coolant flow path 133, and both of them pump the coolant. The operations of the first pump 100P1, the second pump 100P2, the first switching valve 142, and the second switching valve 144 are controlled by a control part 160.

The first coolant flow path 131 is disposed between the second switching valve 144 and the water-cooled condenser 112. The second coolant flow path 132 is disposed between the water-cooled condenser 112 and the first switching valve 142. The third coolant flow path 133 is disposed between the first heat exchanger 152 and the chiller 114. The fourth coolant flow path 134 is disposed between the reserve tank 146 and the second heat exchanger 153. The fifth coolant flow path 135 is disposed between the chiller 114 and the first switching valve 142. The sixth coolant flow path 136 is disposed between the first switching valve 142 and the reserve tank 146. The seventh coolant flow path 137 is disposed between the first switching valve 142 and a radiator 143 described later. The eighth coolant flow path 138 is disposed between the radiator 143 and the first coolant flow path 131 upstream of the first pump 100P1. The ninth coolant flow path 139 is disposed between the second heat exchanger 153 and the second switching valve 144. The tenth coolant flow path 140 is disposed between the second switching valve 144 and the third coolant flow path 133 upstream of the second pump 100P2. The eleventh coolant flow path 141 is disposed between the chiller 114 and the first heat exchanger 152.

In the present embodiment, the first switching valve 142 is a four-way valve, and the second switching valve 144 is a three-way valve. The first switching valve 142 switches the flow path at three types of switching positions of first to third switching positions. At the first switching position, the coolant having flowed in from the second coolant flow path 132 is caused to flow out to the seventh coolant flow path 137, and the flow of the coolant having flowed in from the fifth coolant flow path 135 is stopped (in a first state to be described later). At the second switching position, the coolant having flowed in from the fifth coolant flow path 135 is caused to flow out to the sixth coolant flow path 136, and the flow of the coolant having flowed in from the second coolant flow path 132 is stopped (in a second state to be described later). At the third switching position, the coolant having flowed in from the second coolant flow path 132 is caused to flow out to the sixth coolant flow path 136, and the flow of the coolant having flowed in from the fifth coolant flow path 135 is stopped (in a third state and a fourth state to be described later).

The second switching valve 144 switches the flow path at two types of switching positions of first and second switching positions. At the first switching position, the coolant having flowed in from the ninth coolant flow path 139 is caused to flow out to the tenth coolant flow path 140 (in the second state). At the second switching position, the coolant having flowed in from the ninth coolant flow path 139 is caused to flow out to the first coolant flow path 131 (in the third state and the fourth state). The switching of the first switching valve 142 and the second switching valve 144 is controlled by the control part 160.

The reserve tank 146 is a heat-insulating container having a large heat capacity, and the coolant having flowed through the sixth coolant flow path 136 flows into the container and is stored therein in a heat-insulated state. Then, the stored coolant flows out to the fourth coolant flow path 134. In the present embodiment, the reserve tank 146 is formed integrally with the coolant module 100C. In the present embodiment, "integrally formed" is a concept including both a case where the reserve tank 146 is formed integrally with the housing constituting the coolant manifold and a case where the reserve tank 146 as a separate body is fixed to the coolant manifold with a bolt or the like and is integrated with the coolant manifold. In addition, in the present embodiment, the "heat-insulated state" refers to a state in which the amount of temperature change per unit time of the coolant stored in the reserve tank 146 is smaller than the amount of temperature change per unit time of the coolant present in the coolant flow path 100C1. As an example of the structure of the reserve tank 146, the reserve tank 146 has a double structure of an inner case and an outer case, and a space between the inner case and the outer case is vacuum. In addition, as an example, the reserve tank 146 is made of a material having a low thermal conductivity such as resin.

Since the reserve tank 146 is a heat-insulating container, the temperature of the coolant stored therein is hardly affected by the temperature (air temperature) outside the vehicle. Therefore, even after the vehicle air conditioning system 100A stops operating and a long time has elapsed, the temperature of the coolant stored in the reserve tank 146 is maintained at substantially the same temperature as the temperature of the coolant having flowed through the sixth coolant flow path 136 and flowing into the reserve tank 146 during the operation before the vehicle air conditioning system 100A stops. As a result, thereafter, immediately after re-operation of the vehicle air conditioning system 100A, the coolant having a temperature substantially the same as the temperature at the time of flowing through the sixth coolant flow path 136 can flow out to the fourth coolant flow path 134.

In the HVAC unit 100D, outside air that is air outside the vehicle is introduced, and the outside air is dehumidified, cooled, or heated by the first heat exchanger 152 and/or the second heat exchanger 153 and is sent to the vehicle interior 154, so that the vehicle interior 154 is cooled or heated. In the HVAC unit 100D, the blower 151, the first heat exchanger 152, and the second heat exchanger 153 are disposed in this order from the upstream side of the flow of the outside air toward the vehicle interior 154. The blower 151 sucks outside air and sends the outside air toward the first heat exchanger 152. The first heat exchanger 152 performs heat exchange between the coolant having flowed in from the chiller 114 and the outside air sent from the blower 151. The second heat exchanger 153 performs heat exchange between the coolant having flowed in from the water-cooled condenser 112 or the chiller 114 and the outside air that has passed through the first heat exchanger 152. In the present embodiment, the first heat exchanger 152 is provided for performing dehumidification and cooling, and the second heat exchanger 153 is provided for performing dehumidification, cooling, and heating.

### [Operation of vehicle air conditioning system]

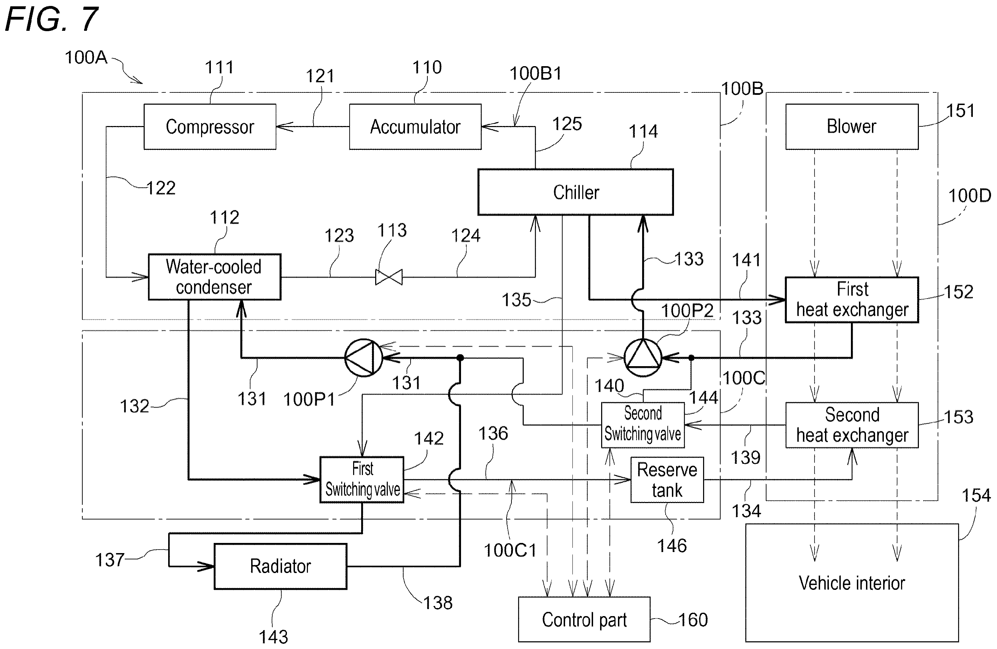

Next, the operation of the vehicle air conditioning system A according to the present embodiment will be described. The vehicle air conditioning system A is configured to be switchable between four states, that is, the first state to the fourth state to be described later depending on states of cooling and heating. In FIGS. 7 to 10, the coolant flow path through which the coolant flows in the coolant flow path C1 is indicated by thick lines.

The refrigerant flow path 100B1 of the refrigerant module 100B will be described. The accumulator 110 stores a liquid refrigerant in the refrigerant. Hereinafter, the refrigerant means a "gaseous refrigerant" unless specified by "liquid" or the like. The accumulator 110 separates the liquid refrigerant contained in the refrigerant having flowed in from the chiller 114. The refrigerant from which the liquid refrigerant has been separated by the accumulator 110 flows through the first refrigerant flow path 121 and flows into the compressor 111.

The compressor 111 compresses the refrigerant having flowed in from the accumulator 110. As a result, the refrigerant becomes a high-temperature compressed gas. The compressor 111 pumps the refrigerant that has become the high-temperature compressed gas to the water-cooled condenser 112 through the second refrigerant flow path 122.

The refrigerant having flowed out of the compressor 111 and flowing through the second refrigerant flow path 122 flows into the water-cooled condenser 112, and flows out to the third refrigerant flow path 123. In addition, the coolant flows into the water-cooled condenser 112 from the first coolant flow path 131 of the coolant flow path 100C1, and flows out to the second coolant flow path 132. The refrigerant having flowed in from the second refrigerant flow path 122 exchanges heat with the coolant having flowed in from the first coolant flow path 131 in the water-cooled condenser 112. Specifically, the refrigerant is condensed and liquefied by being deprived of heat by the coolant. The liquefied refrigerant flows out to the third refrigerant flow path 123. The coolant having flowed in from the first coolant flow path 131 is heated by the refrigerant and flows out to the second coolant flow path 132.

In the expansion valve 113, the liquid refrigerant having flowed in from the third refrigerant flow path 123 is expanded into a low-temperature and low-pressure atomized refrigerant. The atomized refrigerant flows out to the fourth refrigerant flow path 124.

The atomized refrigerant flowing through the fourth refrigerant flow path 124 flows into the chiller 114 and flows out to the fifth refrigerant flow path 125. In addition, the coolant flows into the chiller 114 from the third coolant flow path 133 of the coolant flow path 100C1, and flows out only to the eleventh coolant flow path 141 or to the fifth coolant flow path 135 and the eleventh coolant flow path 141. The atomized refrigerant having flowed in from the fourth refrigerant flow path 124 exchanges heat with the coolant having flowed in from the third coolant flow path 133 in the chiller 114. Specifically, the atomized refrigerant takes heat from the coolant and evaporates. The evaporated and vaporized refrigerant flows out to the fifth refrigerant flow path 125 and flows into the accumulator 110. The vaporized refrigerant may include atomized (liquid) refrigerant that has not been completely vaporized. The coolant having flowed in from the third coolant flow path 133 is cooled by the atomized refrigerant, and flows out only to the eleventh coolant flow path 141 or to the fifth coolant flow path 135 and the eleventh coolant flow path 141.

Next, the coolant flow path 100C1 will be described. The coolant that exchanges heat with the refrigerant in the water-cooled condenser 112 and the chiller 114 flows through the coolant flow path 100C1. In the coolant flow path 100C1, the coolant pumped by the first pump 100P1 and the second pump 100P2 flows between the water-cooled condenser 112, the chiller 114, the first switching valve 142, the radiator 143, the second switching valve 144, the reserve tank 146, the first heat exchanger 152, and the second heat exchanger 153.

As described above, the coolant flows into the water-cooled condenser 112 from the first coolant flow path 131, and the coolant flows out from the second coolant flow path 132. The first pump 100P1 is provided in the first coolant flow path 131, and the coolant is pumped by the first pump 100P1 and flows.

The first switching valve 142 is configured to allow the coolant from the water-cooled condenser 112 and the chiller 114 to flow therethrough. The coolant flows from the water-cooled condenser 112 into the first switching valve 142 through the second coolant flow path 132, or flows from the chiller 114 into the first switching valve 142 through the fifth coolant flow path 135. The first switching valve 142 is configured to allow the coolant to flow out to the sixth coolant flow path 136 or the seventh coolant flow path 137.

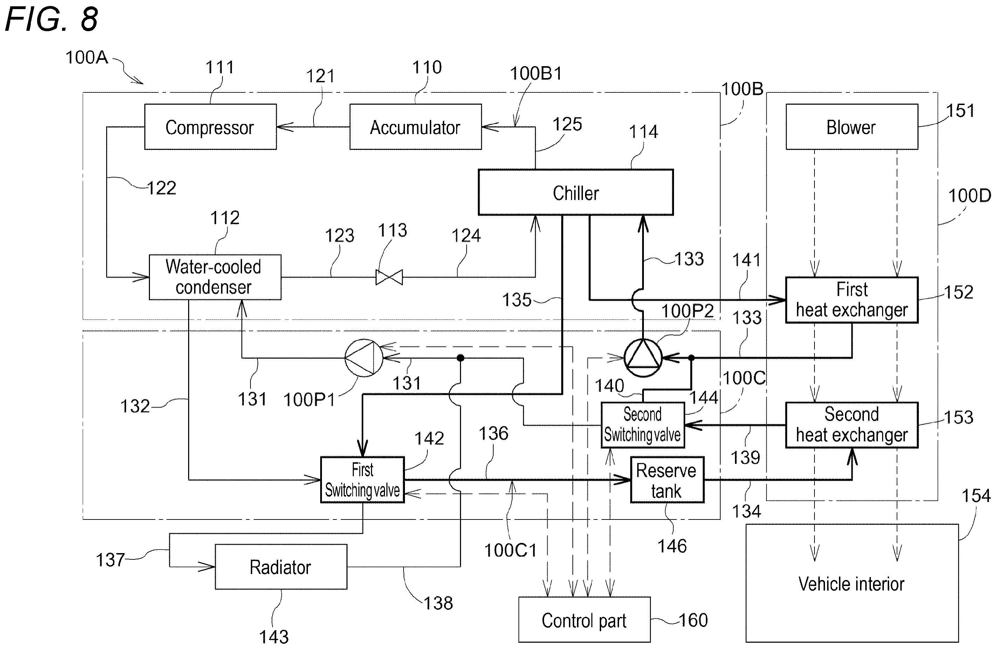

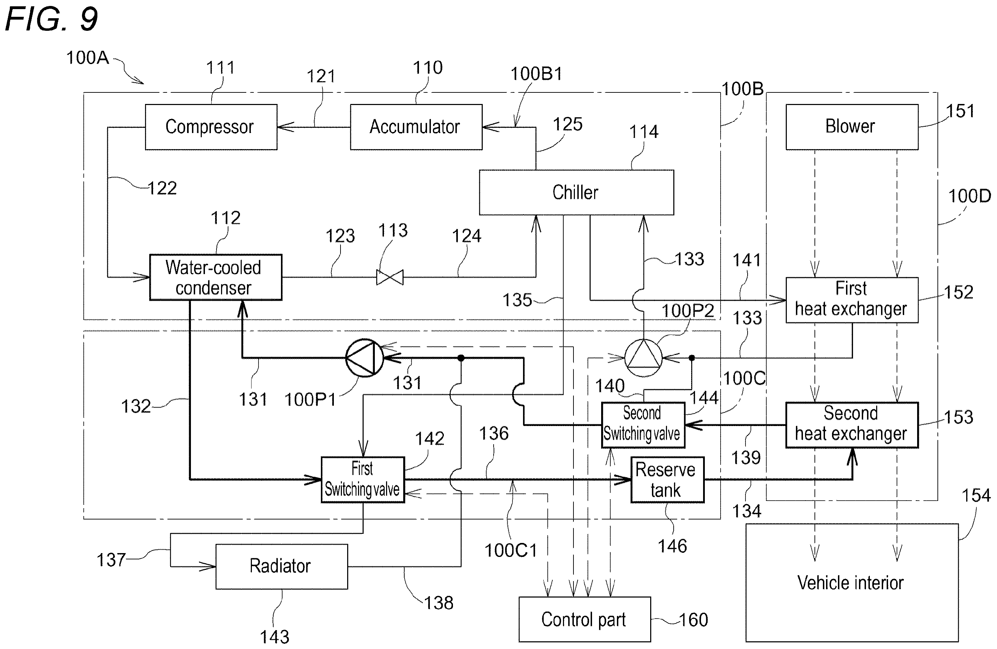

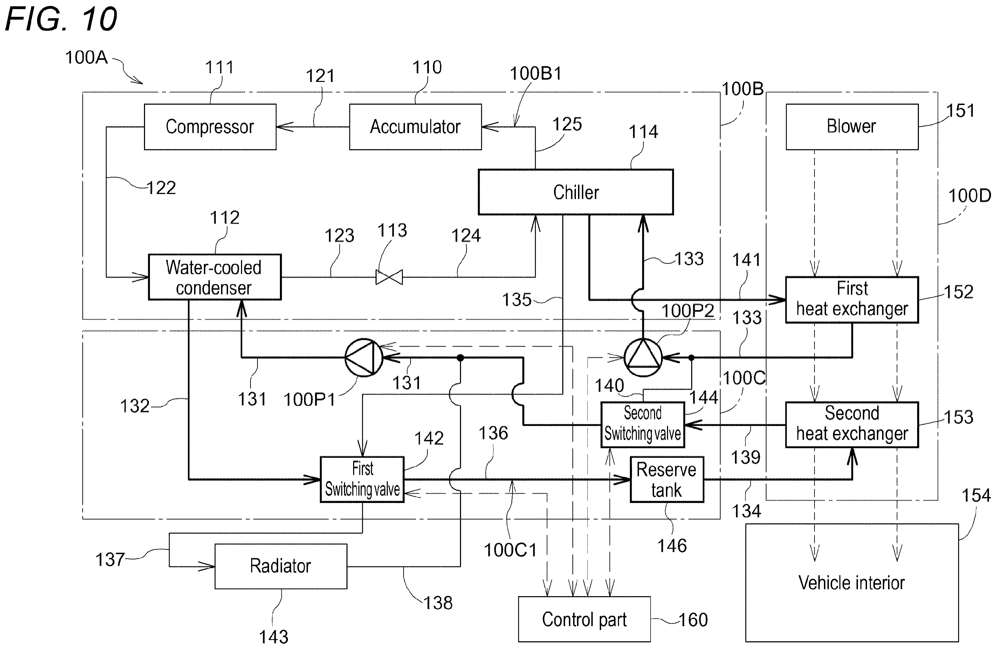

The coolant having flowed out from the first switching valve 142 to the sixth coolant flow path 136 flows into the reserve tank 146. The coolant stored in the reserve tank 146 flows out, flows through the fourth coolant flow path 134, and flows into the second heat exchanger 153. The coolant having flowed into the second heat exchanger 153 flows through the ninth coolant flow path 139 and flows into the second switching valve 144. In the second switching valve 144, the flow path is switched to two types, that is, a case where the coolant flows out to the tenth coolant flow path 140 and a case where the coolant flows out to the first coolant flow path 131. In a case where the coolant flows out to the tenth coolant flow path 140, the coolant flows through the third coolant flow path 133 and flows into the chiller 114 (in the second state illustrated in FIG. 8). In addition, in a case where the coolant flows out to the first coolant flow path 131, the coolant flows through the first coolant flow path 131 and flows into the water-cooled condenser 112 (in the third state illustrated in FIG. 9 and the fourth state illustrated in FIG. 10). In this manner, the second switching valve 144 is switched so as to allow the coolant having flowed in from the second heat exchanger 153 to flow out to either the chiller 114 or the water-cooled condenser 112.

In the first state illustrated in FIG. 7, the coolant having flowed in from the second coolant flow path 132 and having flowed out to the seventh coolant flow path 137 flows into the radiator 143 by flow path switching of the first switching valve 142. In the radiator 143, heat exchange is performed between the coolant and the outside air, and the coolant is cooled. The coolant subjected to the heat exchange flows through the eighth coolant flow path 138 and joins the first coolant flow path 131 on the upstream side of the first pump 100P1.

Next, the HVAC unit 100D will be described. The first heat exchanger 152 and the second heat exchanger 153 perform heat exchange between air and the coolant in order to cool and heat the vehicle interior 154. The air is the outside air sucked by the blower 151. As described above, the coolant having flowed through the eleventh coolant flow path 141 flows into the first heat exchanger 152 and flows out to the third coolant flow path 133. As described above, the coolant having flowed through the fourth coolant flow path 134 flows into the second heat exchanger 153 and flows out to the ninth coolant flow path 139. Therefore, in the first heat exchanger 152, heat exchange is performed between the outside air sent from the blower 151 and the coolant having flowed through the eleventh coolant flow path 141 and having flowed in. In addition, in the second heat exchanger 153, heat exchange is performed or is not performed between the outside air subjected to or not subjected to heat exchange in the first heat exchanger 152 and the coolant having flowed through the fourth coolant flow path 134 and having flowed in, and the air that has passed through the second heat exchanger 153 is introduced into the vehicle interior 154.

### [First state]

Next, the first state to the fourth state of the vehicle air conditioning system 100A will be described in order. The refrigerant module 100B operates in any of the first state to the fourth state. The first state of the vehicle air conditioning system 100A is a cooling mode for dehumidifying and cooling the vehicle interior 154 particularly in the summer season. In the coolant module 100C, in the first state, as illustrated in FIG. 7, the first switching valve 142 is switched by the control part 160 so that the coolant having flowed in from the second coolant flow path 132 flows out to the seventh coolant flow path 137 and the flow of the coolant having flowed in from the fifth coolant flow path 135 is stopped. Therefore, the coolant does not flow through the sixth coolant flow path 136, and the coolant does not flow through the fourth coolant flow path 134, the second heat exchanger 153, and the ninth coolant flow path 139, so that flow path switching is not performed in the second switching valve 144. Under the control of the control part 160, both the first pump 100P1 and the second pump 100P2 are operated.

Therefore, the coolant having flowed through the first coolant flow path 131 and having flowed into the water-cooled condenser 112 exchanges heat with the refrigerant having flowed into the water-cooled condenser 112, is heated, and flows out to the second coolant flow path 132. Thereafter, the coolant flows through the seventh coolant flow path 137, flows into the radiator 143, is cooled by the radiator 143, and then flows through the eighth coolant flow path 138 and the first coolant flow path 131 and flows into the water-cooled condenser 112 again.

Since the second pump 100P2 is operated, the coolant flows through the third coolant flow path 133. The coolant having flowed through the third coolant flow path 133 and having flowed into the chiller 114 exchanges heat with the refrigerant having flowed into the chiller 114, is cooled, and flows out to the eleventh coolant flow path 141. Since the flow is stopped by the first switching valve 142, the coolant does not flow through the fifth coolant flow path 135. Thereafter, the coolant flows into the first heat exchanger 152. The coolant dehumidifies and cools the outside air introduced from the blower 151 and is heated in the first heat exchanger 152. After being heated in the first heat exchanger 152, the coolant flows through the third coolant flow path 133 via the second pump 100P2 and flows into the chiller 114 again. The outside air dehumidified and cooled by the heat exchange in the first heat exchanger 152 is sent toward the second heat exchanger 153.

Since the coolant does not flow into the second heat exchanger 153, the outside air introduced from the blower 151 and subjected to heat exchange in the first heat exchanger 152 is not subjected to heat exchange in the second heat exchanger 153, and is supplied as dehumidified cold air to the vehicle interior 154 as it is. As a result, the vehicle interior 154 is dehumidified and cooled.

When the temperature of the outside air is high, the temperature of the coolant becomes high if the vehicle air conditioning system 100A in operation is temporarily stopped and a long period of time has elapsed. In the first state, since cold air for cooling is generated only by using the first heat exchanger 152, when the vehicle air conditioning system 100A is reoperated after a long time has elapsed, heat exchange is performed immediately after restart in the first heat exchanger 152 by the coolant that is not sufficiently cooled by the chiller 114. Therefore, the outside air sent to the vehicle interior 154 is not sufficiently cooled, and it becomes difficult to quickly cool the vehicle interior 154. In addition, since it is necessary to lower the temperature of the outside air only by the first heat exchanger 152, the amount of dew condensation generated on the surface of the first heat exchanger 152 also increases.

### [Second state]

Similarly to the first state, the second state of the vehicle air conditioning system 100A is a cooling mode for cooling the vehicle interior 154 particularly in the summer season. In the second state, in the coolant module 100C, as illustrated in FIG. 8, the first switching valve 142 is switched by the control part 160 so that the coolant having flowed in from the fifth coolant flow path 135 flows out to the sixth coolant flow path 136 and the flow of the coolant having flowed in from the second coolant flow path 132 is stopped. Therefore, the coolant does not flow through the seventh coolant flow path 137. In addition, the second switching valve 144 is switched so that the coolant having flowed in from the ninth coolant flow path 139 flows out to the tenth coolant flow path 140. Under the control of the control part 160, the first pump 100P1 is stopped and the second pump 100P2 is operated.

As described above, since the coolant does not flow through the first coolant flow path 131 and the second coolant flow path 132, in the second state, heat exchange is not performed in the water-cooled condenser 112, and heat exchange is performed only in the chiller 114. The coolant having flowed through the third coolant flow path 133 and having flowed into the chiller 114 exchanges heat with the refrigerant having flowed into the chiller 114, is cooled, and flows out to the fifth coolant flow path 135 and the eleventh coolant flow path 141. The coolant having flowed through the eleventh coolant flow path 141 flows into the first heat exchanger 152. The coolant dehumidifies and cools the outside air and is heated in the first heat exchanger 152. After being heated in the first heat exchanger 152, the coolant flows through the third coolant flow path 133 via the second pump 100P2 and flows into the chiller 114 again. The outside air dehumidified and cooled by the heat exchange in the first heat exchanger 152 is sent toward the second heat exchanger 153.

The coolant having flowed out of the chiller 114 and having flowed through the fifth coolant flow path 135 flows through the sixth coolant flow path 136 via the first switching valve 142, and is stored in the reserve tank 146. The low-temperature coolant stored at the time of the previous flow is stored in the reserve tank 146, and the coolant stored at the previous time flows out first, and then the coolant that has newly flowed into the reserve tank 146 flows out. The coolant having flowed out of the reserve tank 146 flows through the fourth coolant flow path 134 and flows into the second heat exchanger 153. In the second heat exchanger 153, the low-temperature coolant exchanges heat with the outside air cooled in the first heat exchanger 152 to further dehumidify and cool the outside air. As a result, the coolant is heated. The heated coolant flows out of the second heat exchanger 153, flows through the third coolant flow path 133 via the ninth coolant flow path 139, the second switching valve 144, the tenth coolant flow path 140, and the second pump 100P2, and flows into the chiller 114 again.

As described above, the outside air introduced from the blower 151 is dehumidified and cooled by heat exchange in both the first heat exchanger 152 and the second heat exchanger 153, and is supplied to the vehicle interior 154 as dehumidified cold air. As a result, the vehicle interior 154 is dehumidified and cooled.

Similarly to the first state, when the temperature of the outside air is high, the temperature of the coolant becomes high if the vehicle air conditioning system 100A in operation is temporarily stopped and a long period of time has elapsed. However, in the second state, unlike the first state, cold air for cooling is generated using both the first heat exchanger 152 and the second heat exchanger 153. Moreover, the reserve tank 146 is disposed on the upstream side of the second heat exchanger 153. As described above, the reserve tank 146 stores the coolant having substantially the same temperature as the temperature of the coolant that has flowed through the sixth coolant flow path 136 and flows into the reserve tank 146 during the operation of the vehicle air conditioning system 100A in the second state before the vehicle air conditioning system 100A is stopped. That is, the temperature of the coolant stored in the reserve tank 146 is substantially the same as the temperature cooled by the chiller 114 and is low.

Therefore, in a case where the vehicle air conditioning system 100A is reoperated after a long time has elapsed since the vehicle air conditioning system 100A is stopped, a coolant that is not sufficiently cooled by the chiller 114 flows into the first heat exchanger 152 immediately after the restart, and the sufficiently cooled coolant stored in the reserve tank 146 flows into the second heat exchanger 153. As a result, the outside air subjected to heat exchange in the first heat exchanger 152 is not sufficiently cooled, but the outside air is dehumidified and cooled by exchanging heat with the sufficiently cooled low-temperature coolant in the second heat exchanger 153. Then, since the outside air sufficiently dehumidified and cooled by the heat exchange in the second heat exchanger 153 is sent to the vehicle interior 154 as cold air, the vehicle interior 154 can be quickly dehumidified and cooled. Note that after the chiller 114 is operated after the reoperation, the sufficiently cooled low-temperature coolant continuously flows into the first heat exchanger 152 and the second heat exchanger 153, so that the vehicle interior 154 can be continuously dehumidified and cooled. As described above, the vehicle air conditioning system 100A can quickly exhibit the cooling function immediately after restart.

In the second state, since the heat capacity of the coolant cooled through the chiller 114 is dispersed in the first heat exchanger 152 and the second heat exchanger 153, the air having passed through the first heat exchanger 152 is not rapidly cooled, and a decrease in humidity of the air can be suppressed as compared with that in the first state. Therefore, the amount of dew condensation generated on the surfaces of the first heat exchanger 152 and the second heat exchanger 153 in the second state is smaller than the amount of dew condensation generated on the first heat exchanger 152 in the first state.

### [Third state]

The third state of the vehicle air conditioning system A is a heating mode for heating the vehicle interior 154 particularly in the winter season. In the third state, in the coolant module 100C, as illustrated in FIG. 9, the first switching valve 142 is switched by the control part 160 so that the coolant having flowed in from the second coolant flow path 132 flows out to the sixth coolant flow path 136 and the flow of the coolant having flowed in from the fifth coolant flow path 135 is stopped. Therefore, the coolant does not flow through the seventh coolant flow path 137. In addition, the second switching valve 144 is switched so that the coolant having flowed in from the ninth coolant flow path 139 flows out to the first coolant flow path 131. Under the control of the control part 160, the first pump 100P1 is operated and the second pump 100P2 is stopped.

As described above, since the operation of the second pump 100P2 is stopped, the coolant does not flow through the third coolant flow path 133 and the fifth coolant flow path 135. Therefore, in the third state, heat exchange is not performed in the chiller 114, and heat exchange is performed only in the water-cooled condenser 112. In addition, in the third state, the coolant does not flow into the first heat exchanger 152, and heat exchange is not performed in the first heat exchanger 152. Therefore, the outside air introduced from the blower 151 is directly sent to the second heat exchanger 153 as it is without being subjected to heat exchange in the first heat exchanger 152.

The coolant flowing through the first coolant flow path 131 is pumped by the first pump 100P1 and flows into the water-cooled condenser 112. The coolant having flowed into the water-cooled condenser 112 exchanges heat with the refrigerant having flowed into the water-cooled condenser 112, is heated, and flows out to the second coolant flow path 132. The coolant having flowed through the second coolant flow path 132 flows through the sixth coolant flow path 136 via the first switching valve 142, and is stored in the reserve tank 146. The high-temperature coolant stored at the time of the previous flow is stored in the reserve tank 146, and the coolant stored at the previous time flows out first, and then the coolant that has newly flowed into the reserve tank 146 flows out. The coolant having flowed out of the reserve tank 146 flows through the fourth coolant flow path 134 and flows into the second heat exchanger 153. In the second heat exchanger 153, the high-temperature coolant exchanges heat with the outside air cooled in the first heat exchanger 152 to further heat the outside air. As a result, the coolant is cooled. The cooled coolant flows out of the second heat exchanger 153, further flows through the first coolant flow path 131 via the ninth coolant flow path 139, the second switching valve 144, the first coolant flow path 131, and the first pump 100P1, and flows into the water-cooled condenser 112 again.

As described above, since the coolant does not flow into the first heat exchanger 152, the outside air introduced from the blower 151 is not subjected to heat exchange in the first heat exchanger 152, but is subjected to heat exchange in the second heat exchanger 153 and heated. The heated outside air is supplied to the vehicle interior 154 as heated warm air. As a result, the vehicle interior 154 is heated.

When the temperature of the outside air is low, the temperature of the coolant becomes low if the vehicle air conditioning system 100A in operation is temporarily stopped and a long period of time has elapsed. However, the reserve tank 146 is disposed on the upstream side of the second heat exchanger 153. As described above, the reserve tank 146 stores the coolant having substantially the same temperature as the temperature of the coolant that has flowed through the sixth coolant flow path 136 and flows into the reserve tank 146 during the operation of the vehicle air conditioning system 100A in the third state before the vehicle air conditioning system 100A is stopped. That is, the temperature of the coolant stored in the reserve tank 146 is substantially the same as the temperature heated by the water-cooled condenser 112 and is high.

Therefore, in a case where the vehicle air conditioning system 100A is reoperated after a long time has elapsed since the vehicle air conditioning system 100A is stopped, the sufficiently heated high-temperature coolant stored in the reserve tank 146 flows into the second heat exchanger 153 immediately after the restart. The outside air is heated by heat exchange with the sufficiently heated coolant in the second heat exchanger 153. Then, since the outside air sufficiently heated by the heat exchange in the second heat exchanger 153 is sent to the vehicle interior 154 as warm air, the vehicle interior 154 can be quickly heated. Accordingly, the vehicle air conditioning system 100A exerts a heating function quickly. Note that after the water-cooled condenser 112 is operated after the reoperation, the sufficiently heated high-temperature coolant continuously flows into the second heat exchanger 153, so that the vehicle interior 154 can be continuously heated.

### [Fourth state]

The fourth state of the vehicle air conditioning system 100A is a heating mode for dehumidifying and heating the vehicle interior 154 particularly in the winter season. In the fourth state, in the coolant module 100C, as illustrated in FIG. 10, the first switching valve 142 is switched by the control part 160 so that the coolant having flowed in from the second coolant flow path 132 flows out to the sixth coolant flow path 136 and the flow of the coolant having flowed in from the fifth coolant flow path 135 is stopped. Therefore, the coolant does not flow through the seventh coolant flow path 137. In addition, the second switching valve 144 is switched so that the coolant having flowed in from the ninth coolant flow path 139 flows out to the first coolant flow path 131. Under the control of the control part 160, both the first pump 100P1 and the second pump 100P2 are operated.

Since the second pump 100P2 is operated, the coolant flows through the third coolant flow path 133. Then, the coolant having flowed through the third coolant flow path 133 and having flowed into the chiller 114 exchanges heat with the refrigerant having flowed into the chiller 114, is cooled, and flows out to the eleventh coolant flow path 141. Since the flow is stopped by the first switching valve 142, the coolant does not flow through the fifth coolant flow path 135. Thereafter, the coolant flows into the first heat exchanger 152. The coolant dehumidifies and cools the outside air introduced from the blower 151 and is heated in the first heat exchanger 152. After being heated in the first heat exchanger 152, the coolant flows through the third coolant flow path 133 via the second pump 100P2 and flows into the chiller 114 again. The outside air dehumidified and cooled by the heat exchange in the first heat exchanger 152 is sent toward the second heat exchanger 153.

On the other hand, the coolant flowing through the first coolant flow path 131 is pumped by the first pump 100P1 and flows into the water-cooled condenser 112. The coolant having flowed into the water-cooled condenser 112 exchanges heat with the refrigerant having flowed into the water-cooled condenser 112, is heated, and flows out to the second coolant flow path 132. The coolant having flowed through the second coolant flow path 132 flows through the sixth coolant flow path 136 via the first switching valve 142, and is stored in the reserve tank 146. The high-temperature coolant stored at the time of the previous flow is stored in the reserve tank 146, and the coolant stored at the previous time flows out first, and then the coolant that has newly flowed into the reserve tank 146 flows out. The coolant having flowed out of the reserve tank 146 flows through the fourth coolant flow path 134 and flows into the second heat exchanger 153. In the second heat exchanger 153, the high-temperature coolant exchanges heat with the outside air dehumidified and cooled in the first heat exchanger 152 to heat the outside air. As a result, the coolant is heated in a dehumidified state. The cooled coolant flows out of the second heat exchanger 153, further flows through the first coolant flow path 131 via the ninth coolant flow path 139, the second switching valve 144, the first coolant flow path 131, and the first pump 100P1, and flows into the water-cooled condenser 112 again.

As described above, the outside air introduced from the blower 151 is dehumidified and cooled by the first heat exchanger 152, and then heated in a state of being dehumidified by the second heat exchanger 153. Then, the outside air is supplied to the vehicle interior 154 as dehumidified warm air. As a result, the vehicle interior 154 is dehumidified and heated.

When the temperature of the outside air is low, the temperature of the coolant becomes low if the vehicle air conditioning system 100A in operation is temporarily stopped and a long period of time has elapsed. However, the reserve tank 146 is disposed on the upstream side of the second heat exchanger 153. As described above, the reserve tank 146 stores the coolant having substantially the same temperature as the temperature of the coolant that has flowed through the sixth coolant flow path 136 and flows into the reserve tank 146 during the operation of the vehicle air conditioning system 100A in the fourth state before the vehicle air conditioning system 100A is stopped. That is, the temperature of the coolant stored in the reserve tank 146 is substantially the same as the temperature heated by the water-cooled condenser 112 and is high.

Therefore, in a case where the vehicle air conditioning system 100A is reoperated after a long time has elapsed since the vehicle air conditioning system 100A is stopped, the sufficiently heated high-temperature coolant stored in the reserve tank 146 flows into the second heat exchanger 153 immediately after the restart. The outside air dehumidified and cooled in the first heat exchanger 152 is heated by heat exchange with the sufficiently heated coolant in the second heat exchanger 153. Then, since the outside air sufficiently heated by the heat exchange in the second heat exchanger 153 is sent to the vehicle interior 154 as dehumidified and heated warm air, the vehicle interior 154 can be quickly dehumidified and heated. Accordingly, the vehicle air conditioning system 100A exerts a heating function quickly. Note that after the water-cooled condenser 112 is operated after the reoperation, the sufficiently heated high-temperature coolant continuously flows into the second heat exchanger 153, so that the vehicle interior 154 can be continuously dehumidified and heated.

### [Third embodiment]

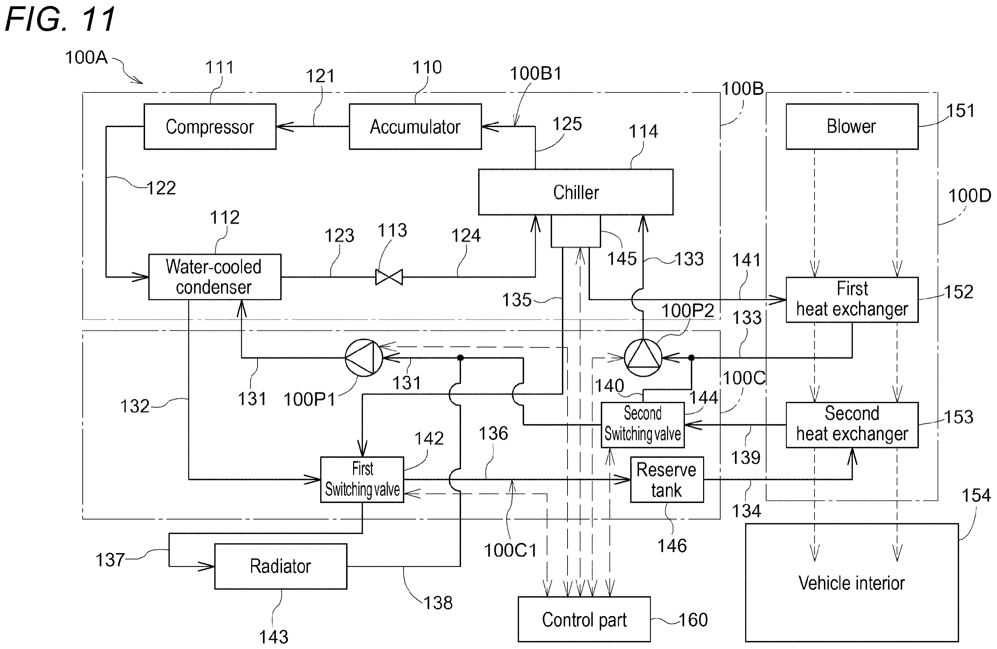

In the third embodiment, as illustrated in FIG. 11, in a vehicle air conditioning system 100A, a flow rate control valve 145 is disposed at a branch portion of an eleventh coolant flow path 141 and a fifth coolant flow path 135 through which a coolant flows out from a chiller 114. The flow rate control valve 145 is configured to be able to control the amount of each of the coolant flowing through the eleventh coolant flow path 141 and the coolant flowing through the fifth coolant flow path 135. Other configurations are similar to those of the second embodiment.

Since the vehicle air conditioning system 100A is provided with the flow rate control valve 145, the amount of the coolant flowing into a first heat exchanger 152 and the amount of the coolant flowing into a second heat exchanger 153 can be easily changed by the flow rate control valve 145. Accordingly, the degrees of cooling and heating by the first heat exchanger 152 and the second heat exchanger 153 can be appropriately adjusted to optimize dehumidification, cooling, and heating.

### [Another embodiment of second embodiment and third embodiment]

In the above-described embodiments, the reserve tank 146 is formed integrally with the coolant module 100C, but instead of this, the reserve tank 146 may be formed integrally with the HVAC unit 100D.

The above-described embodiments illustrate examples in which the vehicle air conditioning system 100A includes the first switching valve 142 and the second switching valve 144 as the switching mechanism. Although not illustrated, the vehicle air conditioning system 100A may include a plurality of on-off valves as the switching mechanism.

### [Fourth embodiment]

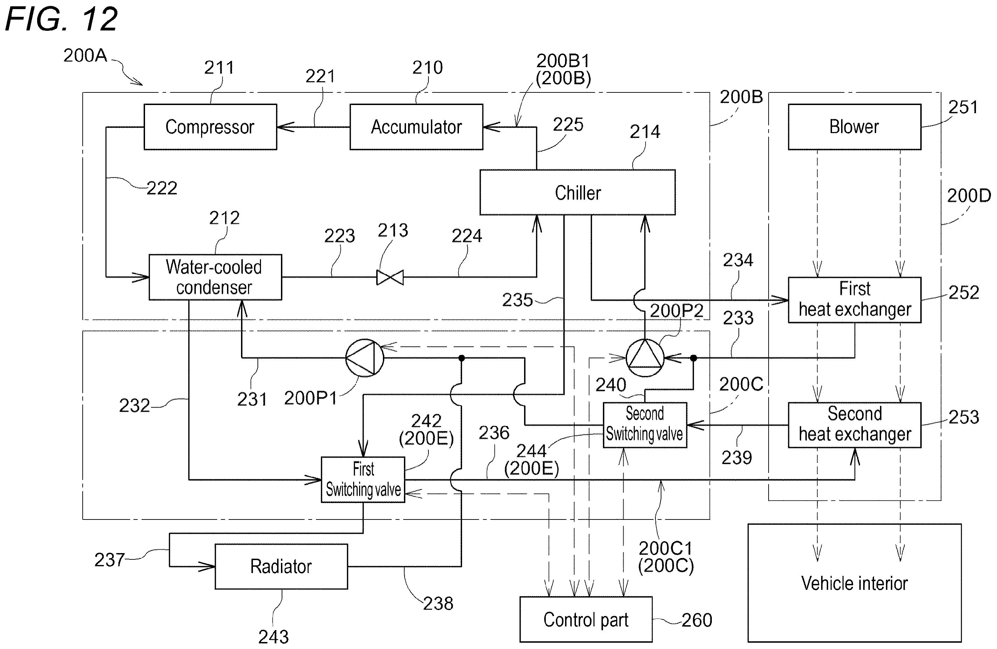

FIG. 12 is a diagram illustrating a circuit configuration of a vehicle air conditioning system 200A according to a fourth embodiment. The vehicle air conditioning system 200A is mounted on a vehicle, and includes a refrigerant module 200B, a coolant module 200C, and an HVAC (Heating, Ventilation, and Air Conditioning) unit 200D as illustrated in FIG. 12. The refrigerant module 200B is provided with a refrigerant flow path 200B1 and is configured as a refrigerant manifold. In addition, the coolant module 200C is provided with a coolant flow path 200C1 and is configured as a coolant manifold. Here, the manifold is a flow path housing in which a plate member is stacked and sealed on a housing body in which the coolant flow path 200C1 or the refrigerant flow path 200B1 is carved. The flow path housing is formed of a metal material having high thermal conductivity including aluminum. The HVAC unit 200D is provided with a first heat exchanger 252 that can perform heat exchange with a chiller 214 and a second heat exchanger 253 that can perform heat exchange with a water-cooled condenser 212.

A refrigerant such as hydrofluorocarbon (HFC) or hydrofluoroolefin (HFO) flows through the refrigerant flow path 200B1, and a coolant including an antifreeze liquid containing ethylene glycol or the like as a main component, cooling water such as a long life coolant, or an insulating oil such as paraffin flows through the coolant flow path 200C1.

As illustrated in FIG. 12, the refrigerant flow path 200B1 circulates the refrigerant across the water-cooled condenser 212 and the chiller 214. The refrigerant module 200B is configured to allow the refrigerant to flow between an accumulator 210, a compressor 211, the water-cooled condenser 212 (an example of a "condenser"), an expansion valve 213, and the chiller 214 (an example of an "evaporator") through the refrigerant flow path 200B1.

The accumulator 210 stores the liquid refrigerant and performs gas-liquid separation of the stored refrigerant. The gaseous refrigerant separated by the accumulator 210 flows through a first refrigerant path 221 and is sent to the compressor 211.

The compressor 211 compresses the refrigerant from the accumulator 210. As a result, the refrigerant becomes a high-temperature compressed gas. The compressor 211 sends the refrigerant that has become the high-temperature compressed gas to the water-cooled condenser 212 through a second refrigerant path 222. Accordingly, the compressor 211 pumps the refrigerant from the accumulator 210 to the water-cooled condenser 212.

The refrigerant that has passed through the compressor 211 flows through the water-cooled condenser 212. The coolant flows into the water-cooled condenser 212 from a first coolant flow path 231, and the coolant flows out from a second coolant flow path 232. The first coolant flow path 231 and the second coolant flow path 232 are configured separately from the second refrigerant path 222. The refrigerant from the second refrigerant path 222 is condensed and liquefied by being deprived of heat by the coolant. The liquefied refrigerant is sent to a third refrigerant path 223. Similarly to the second refrigerant path 222, the third refrigerant path 223 is configured separately from the first coolant flow path 231 and the second coolant flow path 232.

In the expansion valve 213, the refrigerant (liquefied refrigerant) flowing through the third refrigerant path 223 is expanded into a low-temperature and low-pressure atomized refrigerant. The atomized refrigerant is sent to a fourth refrigerant path 224.

The refrigerant flows to the chiller 214 through the fourth refrigerant path 224. As described above, the low-temperature and low-pressure atomized refrigerant expanded by the expansion valve 213 flows through the fourth refrigerant path 224, and such a refrigerant is sent to the chiller 214. The coolant subjected to heat exchange in the first heat exchanger 252 flows into the chiller 214 from a third coolant flow path 233, and the coolant flows out from a fourth coolant flow path 234 and a fifth coolant flow path 235. The third coolant flow path 233, the fourth coolant flow path 234, and the fifth coolant flow path 235 are configured separately from the fourth refrigerant path 224. In the chiller 214, the atomized refrigerant takes heat from the coolant and evaporates. The evaporated and vaporized refrigerant passes through a fifth refrigerant path 225 and flows through the accumulator 210.

The coolant that exchanges heat with the refrigerant in the water-cooled condenser 212 and the chiller 214 flows through the coolant flow path 200C1. The coolant module 200C is configured such that the coolant can flow between the water-cooled condenser 212, the chiller 214, a first switching valve 242, a radiator 243, the second heat exchanger 253, and a second switching valve 244 through the coolant flow path 200C1 by a first pump 200P1 and a second pump 200P2.

The coolant flow path 200C1 includes a switching mechanism 200E switchable between a first state in which the coolant is circulated across the chiller 214 and the first heat exchanger 252 and a second state in which the coolant is circulated across the chiller 214, the first heat exchanger 252, and the second heat exchanger 253. The switching mechanism 200E includes the first switching valve 242 and the second switching valve 244. In the present embodiment, the first switching valve 242 is a four-way valve, and the second switching valve 244 is a three-way valve.

The first switching valve 242 switches the direction in which the coolant discharged from the chiller 214 flows to only the first heat exchanger 252 or to both the first heat exchanger 252 and the second heat exchanger 253. The second switching valve 244 switches the direction in which the coolant discharged from the second heat exchanger 253 flows to the chiller 214 or the water-cooled condenser 212.

As described above, the coolant flows into the water-cooled condenser 212 from the first coolant flow path 231, and the coolant flows out from the second coolant flow path 232. The first pump 200P1 is provided in the first coolant flow path 231, and the coolant is sent by the first pump 200P1.

The first switching valve 242 is configured to allow the coolant to flow therethrough from the water-cooled condenser 212 and the chiller 214. The coolant is sent from the water-cooled condenser 212 to the first switching valve 242 through the second coolant flow path 232, and the coolant is sent from the chiller 214 to the first switching valve 242 through the fifth coolant flow path 235. The second pump 200P2 is provided in the third coolant flow path 233, and the coolant is sent from the second heat exchanger 253 to the chiller 214 by the second pump 200P2. The first switching valve 242 is configured to allow the coolant to be sent to a sixth coolant flow path 236 and a seventh coolant flow path 237.

The coolant sent from the first switching valve 242 to the sixth coolant flow path 236 flows through the second heat exchanger 253. The coolant sent to the second heat exchanger 253 can be sent to the water-cooled condenser 212 through a ninth coolant flow path 239, the second switching valve 244, and the first coolant flow path 231. In addition, the coolant sent to the second heat exchanger 253 can be sent to the chiller 214 through the ninth coolant flow path 239, the second switching valve 244, a tenth coolant flow path 240, and the third coolant flow path 233.

The coolant sent from the first switching valve 242 to the seventh coolant flow path 237 flows through the radiator 243. In the radiator 243, heat exchange is performed with outside air, and the coolant is cooled. The coolant subjected to the heat exchange is sent to the first coolant flow path 231 through an eighth coolant flow path 238.

The HVAC unit 200D includes a blower 251, the first heat exchanger 252, and the second heat exchanger 253. The blower 251 sucks outside air and sends the sucked outside air to the first heat exchanger 252.

The first heat exchanger 252 and the second heat exchanger 253 perform heat exchange between air and the coolant in order to cool and heat the vehicle interior. The air is outside air sucked by the blower 251. As described above, the coolant is introduced into the first heat exchanger 252 through the fourth coolant flow path 234, and is sent to the third coolant flow path 233. As described above, the coolant is introduced into the second heat exchanger 253 through the sixth coolant flow path 236, and the coolant is sent to the first coolant flow path 231. Therefore, in the first heat exchanger 252, heat exchange is performed between the outside air sent from the blower 251 and the coolant supplied through the fourth coolant flow path 234. In addition, in the second heat exchanger 253, heat exchange is performed between the air having passed through the first heat exchanger 252 and the coolant supplied through the sixth coolant flow path 236, and the air subjected to the heat exchange is introduced into the vehicle interior.

### [First state]

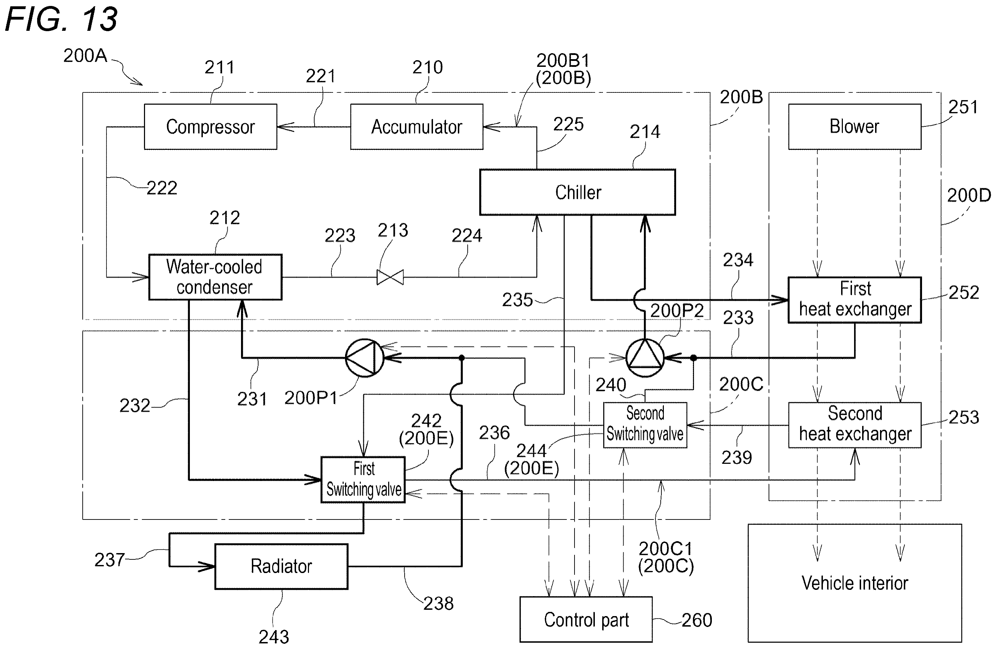

As illustrated in FIG. 13, in the first state, the first switching valve 242 blocks the flow from the fifth coolant flow path 235 to the sixth coolant flow path 236, and the second switching valve 244 blocks the flow from the ninth coolant flow path 239 to the tenth coolant flow path 240. Note that switching of the first switching valve 242 and the second switching valve 244 and the operation control of the first pump 200P1 and the second pump 200P2 in the first state and second to fourth states described later are performed by a control part 260. In the first state, the first pump 200P1 and the second pump 200P2 are driven.

By driving the first pump 200P1, the coolant having flowed through the first coolant flow path 231 and having flowed into the water-cooled condenser 212 exchanges heat with the refrigerant having flowed into the water-cooled condenser 212, is heated, and flows out to the second coolant flow path 232. Thereafter, the coolant flows through the seventh coolant flow path 237 and flows into the radiator 243, is cooled by the radiator 243, and then flows through the eighth coolant flow path 238 and the first coolant flow path 231 and flows into the water-cooled condenser 212 again.

In addition, by driving the second pump 200P2, the coolant from the chiller 214 is supplied to the first heat exchanger 252, the outside air is cooled by the first heat exchanger 252, and the coolant is not supplied to the second heat exchanger 253. That is, in the vehicle air conditioning system 200A, cold air is introduced into the vehicle interior by cooling only by the first heat exchanger 252.

### [Second state]

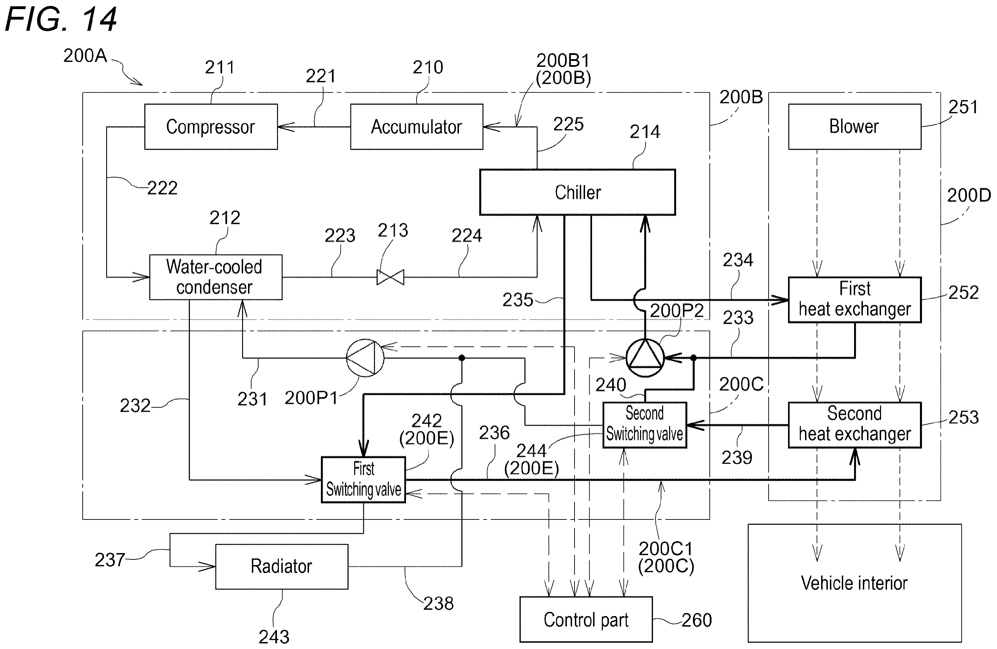

As illustrated in FIG. 14, in the second state, the first switching valve 242 allows the flow from the fifth coolant flow path 235 to the sixth coolant flow path 236, and the second switching valve 244 allows the flow from the ninth coolant flow path 239 to the tenth coolant flow path 240. Furthermore, the second pump 200P2 is driven. On the other hand, the first pump 200P1 is stopped. As a result, the coolant from the chiller 214 is supplied to the first heat exchanger 252, and the outside air is cooled by the first heat exchanger 252. In addition, the coolant from the chiller 214 is also supplied to the second heat exchanger 253, and the outside air cooled by the first heat exchanger 252 is cooled. That is, in the vehicle air conditioning system 200A, cold air is introduced into the vehicle interior by cooling by the first heat exchanger 252 and the second heat exchanger 253.

In the second state, since the heat capacity of the coolant cooled through the chiller 214 is dispersed in the first heat exchanger 252 and the second heat exchanger 253, the air having passed through the first heat exchanger 252 is not rapidly cooled. Therefore, a decrease in the humidity of the air can be suppressed as compared with the case of cooling only by the first heat exchanger 252 as in the first state.

### [Third state]

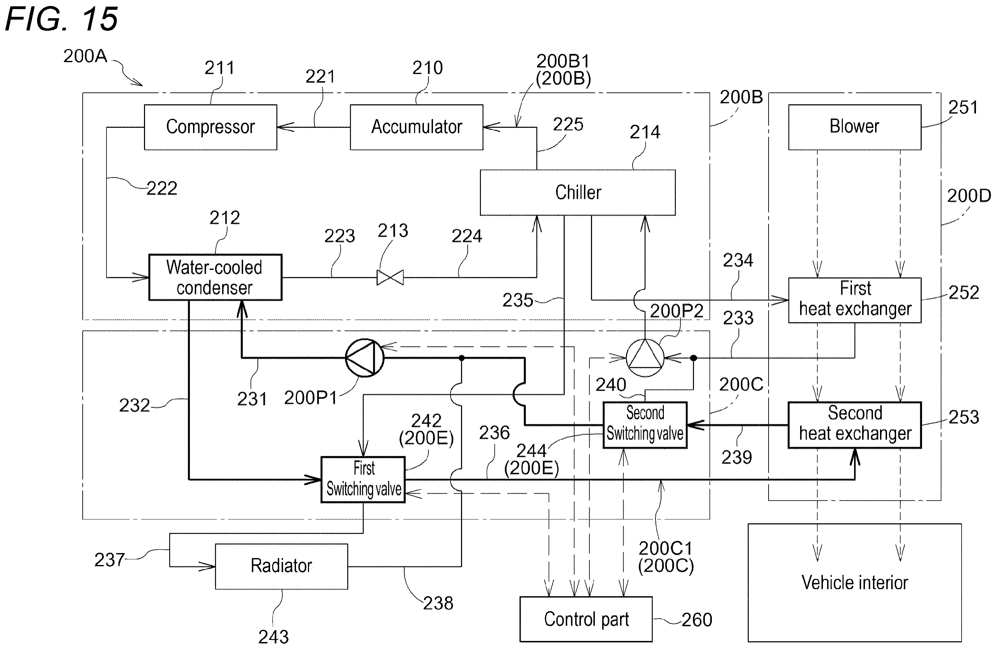

As illustrated in FIG. 15, in the third state, the first switching valve 242 blocks the flow from the fifth coolant flow path 235 to the sixth coolant flow path 236, and allows the flow from the second coolant flow path 232 to the sixth coolant flow path 236. In addition, the second switching valve 244 allows the flow from the ninth coolant flow path 239 to the first coolant flow path 231, and blocks the flow from the ninth coolant flow path 239 to the tenth coolant flow path 240. Furthermore, the first pump 200P1 is driven, and the second pump 200P2 is stopped. As a result, the coolant from the chiller 214 is not supplied to the first heat exchanger 252, and the outside air is not cooled by the first heat exchanger 252. On the other hand, the coolant from the water-cooled condenser 212 is supplied to the second heat exchanger 253 to heat the outside air. That is, in the vehicle air conditioning system 200A, warm air is introduced into the vehicle interior by heating by the second heat exchanger 253.

### [Fourth state]

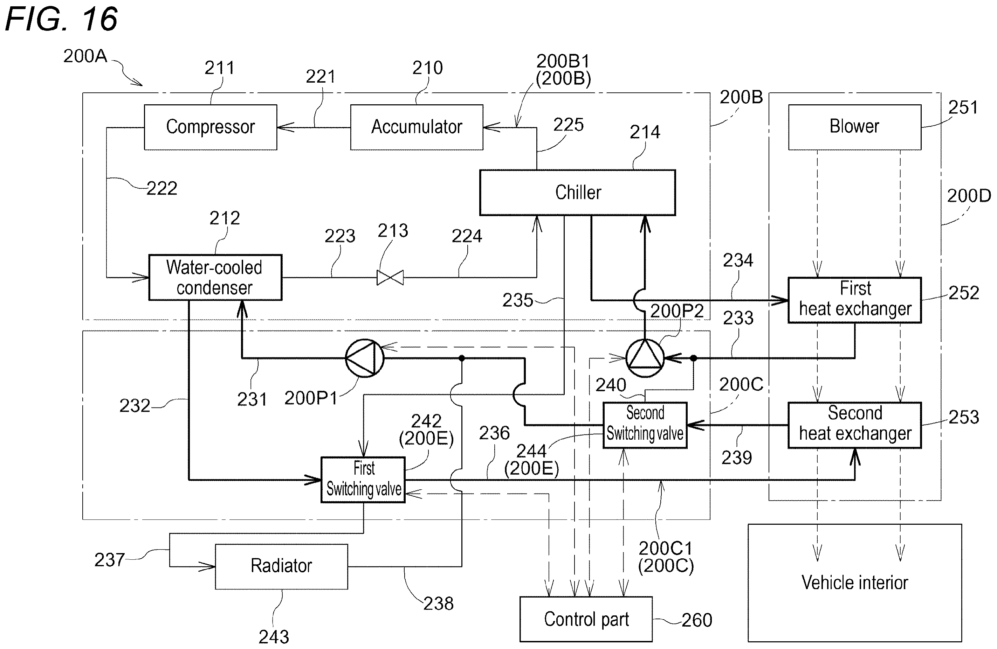

As illustrated in FIG. 16, in the fourth state, the first switching valve 242 blocks the flow from the fifth coolant flow path 235 to the sixth coolant flow path 236, and allows the flow from the second coolant flow path 232 to the sixth coolant flow path 236. In addition, the second switching valve 244 allows the flow from the ninth coolant flow path 239 to the first coolant flow path 231, and blocks the flow from the ninth coolant flow path 239 to the tenth coolant flow path 240. Furthermore, the first pump 200P1 and the second pump 200P2 are driven. As a result, the coolant from the chiller 214 is supplied to the first heat exchanger 252, and the outside air is cooled by the first heat exchanger 252. On the other hand, the coolant from the water-cooled condenser 212 is supplied to the second heat exchanger 253 to heat the outside air. That is, in the vehicle air conditioning system 200A, the air dehumidified by the first heat exchanger 252 is heated by the second heat exchanger 253. In this way, in the fourth state, dehumidification heating is performed, and warm air is introduced into the vehicle interior. In this case, dehumidified heating air can be supplied into the vehicle interior when a defroster function is used, for example, in winter.

Here, as described above, the first switching valve 242 is configured such that the coolant from the water-cooled condenser 212 and the coolant from the chiller 214 can flow therethrough. In a case where the coolant from the water-cooled condenser 212 is compared with the coolant from the chiller 214, the temperature of the coolant from the water-cooled condenser 212 is relatively higher than the temperature of the coolant from the chiller 214. Therefore, in a case where the vehicle interior is heated using the second heat exchanger 253, the first switching valve 242 and the second switching valve 244 are set to the third state or the fourth state in which the coolant is circulated across the water-cooled condenser 212, and in a case where the vehicle interior is cooled using the second heat exchanger 253, the first switching valve 242 and the second switching valve 244 are set to the first state or the second state in which the coolant is circulated across the chiller 214.

In the present embodiment, the first switching valve 242 may be configured such that the opening degree is changeable so as to simultaneously realize the first state and the second state. In this case, in the first switching valve 242, the coolant having a relatively high temperature from the water-cooled condenser 212 and the coolant having a relatively low temperature from the chiller 214 can be mixed and sent to the sixth coolant flow path 236.

### [Fifth embodiment]

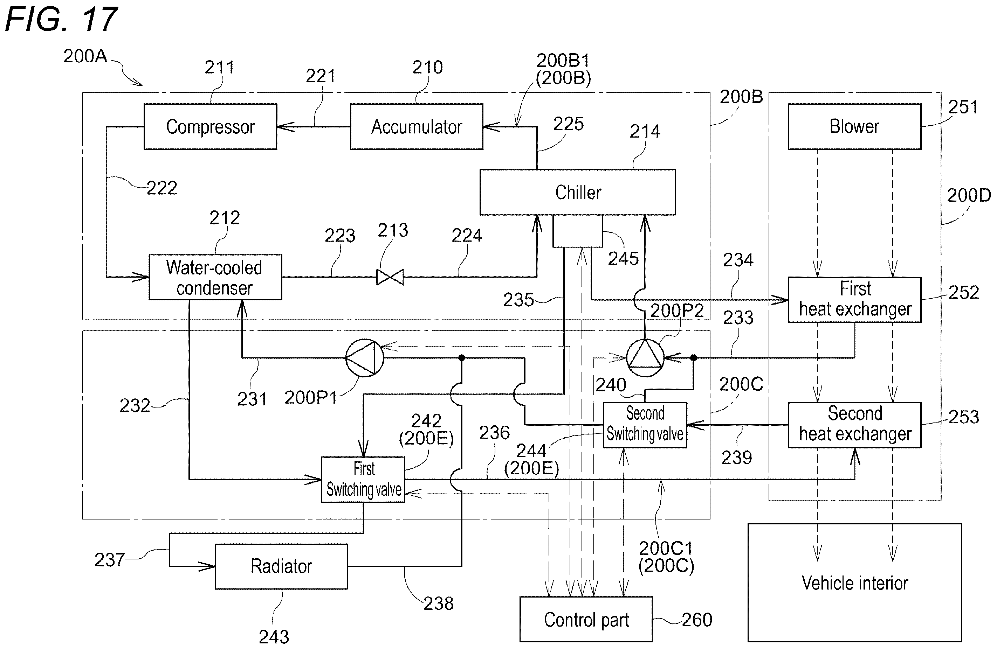

In a fifth embodiment, as illustrated in FIG. 17, in a vehicle air conditioning system 200A, a flow rate control valve 245 is disposed at a branch portion of a fourth coolant flow path 234 and a fifth coolant flow path 235 through which a coolant flows out from a chiller 214. The flow rate control valve 245 is configured to be able to control the amount of each of the coolant flowing through the fourth coolant flow path 234 and the coolant flowing through the fifth coolant flow path 235. Other configurations are similar to those of the fourth embodiment.

Since the vehicle air conditioning system 200A is provided with the flow rate control valve 245, the amount of the coolant flowing through a first heat exchanger 252 and the amount of the coolant flowing through a second heat exchanger 253 can be easily changed by the flow rate control valve 245. Accordingly, cooling power by the first heat exchanger 252 and the second heat exchanger 253 can be appropriately adjusted to optimize dehumidification and cooling.

### [Another embodiment of fourth embodiment and fifth embodiment]

Next, another embodiment of the vehicle air conditioning systems 200A according to the fourth embodiment and the fifth embodiment will be described.

The above-described embodiments illustrate examples in which the switching mechanism 200E performs switching control of the first switching valve 242 and the second switching valve 244 in the vehicle air conditioning system 200A. Alternatively, the vehicle air conditioning system 200A may include a sensor that can detect the temperature and humidity of the air to be introduced into the first heat exchanger 252 and the temperature of the coolant to be introduced into the first heat exchanger 252, and the following control may be performed by the control part 260. The control part 260 performs control to switch the state to the second state when the predicted humidity of the air subjected to heat exchange in the first heat exchanger 252 predicted on the basis of the temperature and humidity of the air to be introduced into the first heat exchanger 252 and the temperature of the coolant to be introduced into the first heat exchanger 252 detected by various sensors becomes equal to or less than a predetermined value (for example, 10%).

According to such an embodiment, the humidity of the air subjected to heat exchange in the first heat exchanger 252 is predicted on the basis of the temperature and humidity of the air to be introduced into the first heat exchanger 252 and the temperature of the coolant to be introduced into the first heat exchanger 252, so that the humidity of the air to be introduced into the vehicle interior can be adjusted in real time. In addition, when the predicted humidity is equal to or less than the predetermined value, the control part 260 switches the switching mechanism E to the second state, so that the vehicle interior can be maintained in an optimum air-conditioning state.

The above-described embodiments illustrate examples in which the switching mechanism 200E includes the first switching valve 242 and the second switching valve 244 in the vehicle air conditioning system 200A. Although not illustrated, in the vehicle air conditioning system 200A, the switching mechanism 200E may include a plurality of on-off valves.

In the above-described embodiments, it has been described that the first switching valve 242 is configured such that the opening degree is changeable so as to simultaneously realize the first state and the second state. However, the first switching valve 242 can be configured not to simultaneously realize the first state and the second state. For example, if the period of the coolant circulating across the first heat exchanger 252 and the second heat exchanger 253 is changed, the air-conditioning temperature can be changed in multiple stages.

### [Outline of above-described embodiments]

Hereinafter, outlines of the vehicle air conditioning systems A, 100A, 200A described above will be described.

(1) The vehicle air conditioning system A includes: the refrigerant flow path B1 that circulates the refrigerant across the water-cooled condenser 12 (condenser) and the chiller 14 (evaporator); the coolant flow path C1 through which the coolant that exchanges heat with the refrigerant in the water-cooled condenser 12 (condenser) and the chiller 14 (evaporator) flows; and the heat exchanger 52 that performs heat exchange between air and the coolant in order to cool and heat the vehicle interior.

According to the present configuration, heat exchange can be performed by causing the coolant warmed by the water-cooled condenser 12 to flow through the heat exchanger 52 during heating of the vehicle interior, and heat exchange can be performed by causing the coolant cooled by the chiller 14 to flow through the heat exchanger 52 during cooling of the vehicle interior. As a result, an interior evaporator and a heater core included in a conventional vehicle air conditioning system can be replaced with the one heat exchanger 52, so that downsizing and cost reduction of the vehicle air conditioning system A can be achieved. Therefore, the vehicle air conditioning system A having a small size and an inexpensive configuration can be realized.

(2) It is preferable that in the vehicle air conditioning system A according to (1), the switching valve 42 be disposed in the coolant flow path C1, the switching valve 42 being switchable between the first state in which the coolant is circulated across the water-cooled condenser 12 and the second state in which the coolant is circulated across the chiller 14.

According to the present configuration, when the vehicle interior is heated, the switching valve 42 is switched to the first state, so that the coolant warmed by the water-cooled condenser 12 can flow through the heat exchanger 52, and when the vehicle interior is cooled, the switching valve 42 is switched to the second state, so that the coolant cooled by the chiller 14 can flow through the heat exchanger 52. In this manner, the coolant flowing through the heat exchanger 52 can be easily switched by the switching valve 42.

(3) It is preferable that in the vehicle air conditioning system A according to (2), an opening degree of the switching valve 42 be changeable so as to simultaneously realize the first state and the second state.

For example, when only the coolant warmed by the water-cooled condenser 12 flows through the heat exchanger 52 during heating of the vehicle interior, intensity of the heating may be too strong. In addition, when only the coolant cooled by the chiller 14 flows through the heat exchanger 52 during cooling of the vehicle interior, intensity of the cooling may be too strong. Therefore, according to the present configuration, in the switching valve 42, both the coolant warmed by the water-cooled condenser 12 and the coolant cooled by the chiller 14 can flow to the heat exchanger 52, so that intensity of the cooling and heating in the vehicle interior can be adjusted.

(4) It is preferable that in the vehicle air conditioning system A according to (3), the switching valve 42 adjust the flow rate ratio of the coolant from the chiller 14 to the coolant from the water-cooled condenser 12.

According to the present configuration, by controlling the flow rate of the coolant from the water-cooled condenser 12 and the flow rate of the coolant from the chiller 14, the temperature of the coolant sent to the heat exchanger 52 is adjusted, and the temperature in the vehicle interior can be adjusted.

(5) It is preferable that in the vehicle air conditioning system A according to (3), the opening degree of the switching valve 42 be changed according to a set temperature of air conditioning in the vehicle interior.

According to the present configuration, by controlling the flow rate of the coolant from the water-cooled condenser 12 and the flow rate of the coolant from the chiller 14 according to the set temperature of air conditioning in the vehicle interior, the temperature of the coolant sent to the heat exchanger 52 is adjusted, and the temperature in the vehicle interior can be adjusted to the set temperature of the air conditioning.

(6) It is preferable that the vehicle air conditioning system 100A according to (1) further include the reserve tank 146 (storage part) that is disposed upstream of the heat exchangers 152, 153 in the coolant flow path 100C1 and stores the coolant in a heat-insulated state.

According to the present configuration, the low-temperature coolant can be stored in the reserve tank 146 in the summer season, and the high-temperature coolant can be stored in the reserve tank 146 in the winter season. As a result, in a case where it is desired to perform cooling or heating promptly after starting the vehicle, the low-temperature or high-temperature coolant stored in the reserve tank 146 is introduced into the heat exchangers 152, 153, and cold air or warm air can be promptly sent into the vehicle interior 154.

(7) In the vehicle air conditioning system 100A according to (6), the heat-insulated state is a state in which the amount of temperature change per unit time of the coolant stored in the reserve tank 146 is smaller than the amount of temperature change per unit time of the coolant present in the coolant flow path 100C1.

According to the present configuration, even after the vehicle air conditioning system 100A stops operating and a long time has elapsed, the temperature of the coolant stored in the reserve tank 146 can be maintained at substantially the same temperature as the temperature of the coolant during the operation before the vehicle air conditioning system 100A stops. Therefore, immediately after the re-operation of the vehicle air conditioning system 100A thereafter, the coolant having substantially the same temperature as the temperature of the coolant during the operation before the vehicle air conditioning system 100A stops can be used.

(8) It is preferable that in the vehicle air conditioning system 100A according to (6) or (7), the heat exchangers 152, 153 include the first heat exchanger 152 that allows heat exchange between the air and the coolant and the second heat exchanger 153 that allows heat exchange between the air subjected to heat exchange in the first heat exchanger 152 and the coolant, and the reserve tank 146 store the coolant to be introduced into the second heat exchanger 153.

According to the present configuration, since the first heat exchanger 152 that allows heat exchange between the air and the coolant and the second heat exchanger 153 that allows heat exchange between the air subjected to the heat exchange in the first heat exchanger 152 and the coolant are provided, a drying material such as desiccant is unnecessary and downsizing can be achieved. In addition, since the reserve tank 146 of the present embodiment stores the coolant to be introduced into the second heat exchanger 153, cold air or warm air can be quickly sent into the vehicle interior 154 by adjusting the temperature of the air immediately before being introduced into the vehicle interior 154.

(9) The vehicle air conditioning system 200A includes: the refrigerant flow path 200B1 that circulates the refrigerant across the water-cooled condenser 212 and the chiller 214; the coolant flow path 200C1 through which the coolant that exchanges heat with the refrigerant in the water-cooled condenser 212 and the chiller 214 flows; the first heat exchanger 252 that allows heat exchange between air and the coolant; and the second heat exchanger 253 that allows heat exchange between the air subjected to the heat exchange in the first heat exchanger 252 and the coolant, in which the coolant flow path 200C1 includes the switching mechanism 200E that is switchable between the first state in which the coolant is circulated across the chiller 214 and the first heat exchanger 252 and the second state in which the coolant is circulated across the chiller 214, the first heat exchanger 252, and the second heat exchanger 253.

According to the present configuration, the cooling mode similar to that in the conventional art is executed in the first state, and the coolant cooled through the chiller 214 can be distributed to the first heat exchanger 252 and the second heat exchanger 253 in the second state. In the second state, since the heat capacity of the coolant cooled through the chiller 214 is dispersed in the first heat exchanger 252 and the second heat exchanger 253, the air having passed through the first heat exchanger 252 is not rapidly cooled, and a decrease in humidity of the air can be suppressed as compared with the case where the air is cooled only by the first heat exchanger 252 as in the first state. Furthermore, the humidity of the air introduced into the vehicle interior can be adjusted by adjusting the flow rate of the coolant flowing through the first heat exchanger 252 and the second heat exchanger 253. Therefore, the vehicle air conditioning system 200A that can adjust the humidity of blown air can be realized.

(10) It is preferable that in the vehicle air conditioning system 200A according to (9), the switching mechanism 200E include the first switching valve 242 that switches the direction in which the coolant discharged from the chiller 214 flows to only the first heat exchanger 252 or to both the first heat exchanger 252 and the second heat exchanger 253, and the second switching valve 244 that switches the direction in which the coolant discharged from the second heat exchanger 253 flows to the chiller 214 or the water-cooled condenser 212.

According to the present configuration, if the direction in which the coolant discharged from the chiller 214 flows is set to both the first heat exchanger 252 and the second heat exchanger 253 in the first switching valve 242, and the direction in which the coolant discharged from the second heat exchanger 253 flows is set to the chiller 214 in the second switching valve 244, the humidity of the blown air can be adjusted in the cooling mode. As described above, if the switching mechanism 200E includes two switching valves (first switching valve 242, second switching valve 244), the device configuration can be simplified.

### INDUSTRIAL APPLICABILITY

The technique according to the present disclosure can be used in a vehicle air conditioning system mounted on a vehicle.

### REFERENCE SIGNS LIST

[First embodiment]
   12: Water-cooled condenser (Condenser), 14: Chiller (Evaporator), 42: Switching valve, 52: Heat exchanger, A: Vehicle air conditioning system, B1: Refrigerant flow path, and C1: Coolant flow path
[Second embodiment, Third embodiment]
   146: Reserve tank (storage part), 152: First heat exchanger (Heat exchanger), 153: Second heat exchanger (Heat exchanger), 100A: Vehicle air conditioning system, and 100C 1: Coolant flow path
[Fourth embodiment, Fifth embodiment]
   212: Water-cooled condenser (Condenser), 214: Chiller (Evaporator), 242: First switching valve, 244: Second switching valve, 252: First heat exchanger, 253: Second heat exchanger, 200A: Vehicle air conditioning system, 200B1: Refrigerant flow path, 200C1: Coolant flow path, and 200E: Switching mechanism

## Claims

1. A vehicle air conditioning system comprising:
a refrigerant flow path that circulates a refrigerant across a condenser and an evaporator;
a coolant flow path through which a coolant that exchanges heat with the refrigerant in the condenser and the evaporator flows; and
a heat exchanger that performs heat exchange between air and the coolant in order to cool and heat a vehicle interior.

2. The vehicle air conditioning system according to claim 1, wherein a switching valve is disposed in the coolant flow path, the switching valve being switchable between a first state in which the coolant is circulated across the condenser and a second state in which the coolant is circulated across the evaporator.

3. The vehicle air conditioning system according to claim 2, wherein an opening degree of the switching valve is changeable so as to simultaneously realize the first state and the second state.

4. The vehicle air conditioning system according to claim 3, wherein the switching valve adjusts a flow rate ratio of the coolant from the evaporator to the coolant from the condenser.

5. The vehicle air conditioning system according to claim 3, wherein the opening degree of the switching valve is changed according to a set temperature of air conditioning in the vehicle interior.

6. The vehicle air conditioning system according to claim 1 further comprising:
a storage part that is disposed upstream of the heat exchanger in the coolant flow path and stores the coolant in a heat-insulated state.

7. The vehicle air conditioning system according to claim 6, wherein the heat-insulated state is a state in which an amount of temperature change per unit time of the coolant stored in the storage part is smaller than an amount of temperature change per unit time of the coolant present in the coolant flow path.

8. The vehicle air conditioning system according to claim 6 or 7,
wherein the heat exchanger includes a first heat exchanger that allows heat exchange between the air and the coolant and a second heat exchanger that allows heat exchange between the air subjected to heat exchange in the first heat exchanger and the coolant, and
the storage part stores the coolant to be introduced into the second heat exchanger.

9. A vehicle air conditioning system comprising:
a refrigerant flow path that circulates a refrigerant across a condenser and an evaporator;
a coolant flow path through which a coolant that exchanges heat with the refrigerant in the condenser and the evaporator flows;
a first heat exchanger that allows heat exchange between air and the coolant; and
a second heat exchanger that allows heat exchange between the air subjected to heat exchange in the first heat exchanger and the coolant,
wherein the coolant flow path includes a switching mechanism that is switchable between a first state in which the coolant is circulated across the evaporator and the first heat exchanger and a second state in which the coolant is circulated across the evaporator, the first heat exchanger, and the second heat exchanger.

10. The vehicle air conditioning system according to claim 9, wherein the switching mechanism includes a first switching valve that switches a direction in which the coolant discharged from the evaporator flows to only the first heat exchanger or to both the first heat exchanger and the second heat exchanger, and a second switching valve that switches a direction in which the coolant discharged from the second heat exchanger flows to the evaporator or the condenser.
